# EUROPEAN PATENT APPLICATION

(11) **EP 4 707 667 A1**
(43) Date of publication of application: **11.03.2026**
(21) Application number: 24792065.5
(22) Date of filing: 18.04.2024
(51) Int. Cl.: F21S 43/50, B60R 13/02

(54) **VEHICLE TRIM**

(30) Priority: 18.04.2023 CN 202320869217 U
(71) Applicant: Yanfeng International Automotive Technology Co., Ltd., Shanghai 201306 (CN)
(72) Inventor: SHEN, Shouchen, Shanghai 201315 (CN); ZHA, Yiwen, Shanghai 201315 (CN)
(74) Representative: Meissner Bolte Partnerschaft mbB
(86) International application number: PCT/CN2024/088484
(87) International publication number: WO 2024/217480

(57) **Abstract**

A vehicle trim component, comprising a light source (210), a transparent frame (300), a semi-transreflective layer (310), a total reflection layer (320), and optical patterns (330). At least one of two opposing surfaces of the transparent frame (300) is an uneven three-dimensional surface, and the semi-transreflective layer (310) and the total reflection layer (320) are respectively attached to the two opposing surfaces, so that light - after the optical patterns (330) are illuminated by the light source (210) - undergoes attenuated reflection and transmission multiple times between the total reflection layer (320) and the semi-transreflective layer (310) along an irregular optical path, thereby generating a randomly distributed visual depth-of-field effect.

## Description

### TECHNICAL FIELD

The present disclosure relates to vehicles and, more particular, to a vehicle trim component.

### BACKGROUND

At present, common depth-of-field light effect in the market is achieved by means of a semi-transreflective film and a total reflection film, so as to achieve multilayer reflection and transmission of an image or light between the two film layers, thereby forming the depth-of-field effect. Specifically, a pattern is arranged between the two film layers, and the light emitted by the light source is reflected and diffracted in each direction after irradiating the pattern; when the light reaches the lower total reflection film, the entire light path is totally reflected; when the light reaches the semi-transreflective film upwards, a part of the light is seen through the semi-transreflective film, and the other part of the light is reflected again downwards to reach the lower total reflection film for total reflection. The semi-transmission and semi-reflection as well as the total reflection of N times are performed, so that the optical pattern observed by a human eye in one observation position has layered depth-of-field (i.e. fading and layered) effect.

Since the total reflection film is a plane, the layered reflections observed by a human eye are presented as a regular arrangement, for example, concentric rings maintaining equal spacing and gradually reducing in intensity, i.e., fading. Obviously, such regular arrangement, when applied to automotive interiors, lacks aesthetic appeal and sophistication, as it suffers from insufficient randomness and visual refinement.

### SUMMARY

In order to solve the problems of insufficient esthetics and the like in the above prior art, the present disclosure provides a vehicle trim component.

According to the vehicle trim component of the present disclosure, it comprises a light source, a transparent frame, a semi-transreflective layer, a total reflection layer and an optical pattern wherein at least one of two opposing surfaces of the transparent frame is a three-dimensional surface with uneven height, and the semi-transreflective layer and the total reflection layer are attached to the two opposing surfaces, respectively, so that light of the optical pattern illuminated by the light source undergoes multiple attenuated reflections and transmissions between the total reflection layer and the semi-transreflective layer along an irregular optical path to produce a randomly arranged visual depth-of-field effect.

Preferably, there are convex or concave surfaces with different localized heights on the three-dimensional surface with uneven height in different positions, the convex or concave surfaces are planar or curved surfaces with curvature, and a connecting surface for connecting these convex or concave surfaces is also a plane or a curved surface.

Preferably, the three-dimensional surface with uneven height is an undulating sawtooth three-dimensional surface with same or different heights and angles in a unidirectional arrangement, an irregularly cut three-dimensional surface with same or different heights and angles in each direction, a freeform three-dimensional surface with same or different heights and curvatures in each direction, a three-dimensional surface with convex or concave geometric cutting bodies having same or different shapes and distributed randomly or regularly on a plane, or a three-dimensional surface with convex or concave curved solids having certain curvatures and distributed randomly or regularly on a plane.

Preferably, the optical pattern is formed inside the transparent frame.

Preferably, the optical pattern is achieved by printing, etching, laser engraving, forming air bubbles, or insert injection molding reflective materials or a component inside the transparent frame.

Preferably, the optical pattern is a light-transmitting structure formed on the total reflection layer.

Preferably, the optical pattern is achieved by engraving and perforating, punching, partially masking with a total reflection surface treatment, or printing a light-transmitting dot, line or surface pattern on the total reflection layer.

Preferably, the optical pattern is provided by a grating film arranged on a side of the transparent frame.

Preferably, the optical pattern is provided by a point light source arranged in the transparent frame.

Preferably, the optical pattern is provided by a light guide strip arranged at least partially in the transparent frame.

Preferably, the optical pattern is provided by a conformal light-panel light source disposed on one of the two opposing surfaces of the transparent frame.

Preferably, the optical pattern is formed on one of the two opposing surfaces of the transparent frame.

Preferably, the optical pattern is a partially concave or convex three-dimensional structure located on one of the two opposing surfaces of the transparent frame, or a pattern applied to one of the two opposing surfaces of the transparent frame, or to a surface of the total reflection layer or the semi-transreflective layer attached to the transparent frame, by spraying, printing, screen printing, PVD, electroplating, film lamination or hot stamping, or a part with reflective three-dimensional or 2D features on an additional component to be attached to one of the two opposing surfaces of the transparent frame.

Preferably, the optical pattern is provided by a patterned light-transmitting layer disposed on a side of the transparent frame.

Preferably, the patterned light-transmitting layer is a transparent plate, on which a light-transmitting region with a pattern and a non-light-transmitting region are formed by applying a film, masking and spraying, screen printing, electroplating, PVD, hot stamping, or masking with another part; or is an opaque plate, on which a light-transmitting region with a pattern and a non-light-transmitting region are formed by perforation or laser engraving to form a light-transmitting opening; or a film, on which a light-transmitting region with a pattern and a non-light-transmitting region are formed by applying a film, spraying, screen printing, electroplating, PVD, hot stamping, or masking with another part.

Preferably, the light source is a side-lit light source disposed on a side of the transparent frame.

Preferably, the light source is a surface light source or a point light source located on a side of the total reflection layer away from the semi-transreflective layer.

Preferably, the light source is a PCB light panel with LED lamp beads, or a light guide strip, a light guide plate, a diffusion film, a diffusion plate, a light-emitting film, or a light-emitting fiber capable of emitting light after being illuminated.

Preferably, the light source is a coherent light source.

Preferably, the light source is a point light source disposed inside the transparent frame.

Preferably, the light source is a conformal light-panel light source disposed on one of the two opposing surfaces of the transparent frame.

Preferably, the transparent frame includes a light-emitting area and a non-light-emitting area, and the light source of the conformal light panel is arranged in the non-light-emitting area.

Preferably, a conformal light panel of the conformal light-panel light source is a rigid or flexible light panel, and has a same profile with that of one of the two opposing surfaces of the transparent frame and is attached thereto by means of structural installation, glue or insert injection molding.

Preferably, the semi-transreflective layer is disposed on the transparent frame by pasting a semi-transreflective film, spraying, PVD, or attaching a part having semi-transreflective property to one of the two opposing surfaces of the transparent frame.

Preferably, the total reflection layer is disposed on one of the two opposing surfaces of the transparent frame by spraying, screen printing, film lamination, electroplating, hot stamping or PVD processes, or three-dimensional freeform surfaces of one of the two opposing surfaces of the transparent frame are microscopically configured into an optical total reflection, or the total reflection layer is disposed on the transparent frame by attaching a part having total reflection property to one of the two opposing surfaces of the transparent frame.

Preferably, the transparent frame is a single piece formed by injection molding.

Preferably, thickness of the transparent frame is 1 mm to 11 mm.

Preferably, injection molding material of the transparent frame is mixed with reflective particles.

Preferably, the transparent frame comprises an upper frame and a lower frame formed by injection molding, the semi-transreflective layer is carried on one of two opposing surfaces of the upper frame, and the total reflection layer is carried on one of two opposing surfaces of the lower frame.

Preferably, thickness of the upper frame is 1 mm to 11 mm, and/or thickness of the lower frame is 1 mm to 11 mm.

Preferably, the lower frame is a non-transparent piece, and the total reflection layer is attached to a surface of the two opposing surfaces of the lower frame adjacent to the upper frame.

Preferably, an opening is provided in the lower frame and the total reflection layer to form the optical pattern.

The vehicle trim component according to the present disclosure adopts the optical total reflection mechanism of the total reflection layer and the mechanism of partial light reflection and partial light transmission of the semi-transreflective layer to achieve the random and repeated entry of the optical pattern into the sight line, thereby achieving a backlight decorative strip with crystal textures, an operation panel, a trim strip, and the like.

### FIGURES

- FIGURE 1: is a schematic view of a vehicle comprising a vehicle trim component according to a preferred embodiment of the present disclosure.
- FIGURE 2: illustrates an interior of the vehicle of FIGURE 1.
- FIGURE 3: illustrates another interior of the vehicle of FIGURE 1.
- FIGURE 4: illustrates yet another interior of the vehicle of FIGURE 1.
- FIGURE 5: is an exploded view of a vehicle trim component of a first embodiment.
- FIGURE 6A: is an optical path diagram of the vehicle trim component of the first embodiment.
- FIGURE 6B: is an optical path diagram of a variant of the vehicle trim component of the first embodiment.
- FIGURE 7: is an exploded view of a vehicle trim component of a second embodiment.
- FIGURE 8A: is an optical path diagram of the vehicle trim component of the second embodiment.
- FIGURE 8B: is an optical path diagram of a variant of the vehicle trim component of the second embodiment.
- FIGURE 9: is an exploded view of a vehicle trim component of a third embodiment.
- FIGURE 10A: is an optical path diagram of the vehicle trim component of the third embodiment.
- FIGURE 10B: is an optical path diagram of a variant of the vehicle trim component of the third embodiment.
- FIGURE 11A: is an optical path diagram of the vehicle trim component of the fourth embodiment.
- FIGURE 11B: is an optical path diagram of a variant of the vehicle trim component of the fourth embodiment.
- FIGURE 12A: is an optical path diagram of the vehicle trim component of the fifth embodiment.
- FIGURE 12B: is an optical path diagram of a variant of the vehicle trim component of the fifth embodiment.
- FIGURE 13A: is an optical path diagram of the vehicle trim component of the sixth embodiment.
- FIGURE 13B: is an optical path diagram of a variant of the vehicle trim component of the sixth embodiment.
- FIGURE 14A: is an optical path diagram of the vehicle trim component of the seventh embodiment.
- FIGURE 14B: is an optical path diagram of a variant of the vehicle trim component of the seventh embodiment.
- FIGURE 15A: is an optical path diagram of the vehicle trim component of the eighth embodiment.
- FIGURE 15B: is an optical path diagram of a variant of the vehicle trim component of the eighth embodiment.
- FIGURE 16A: is an optical path diagram of the vehicle trim component of the ninth embodiment.
- FIGURE 16B: is an optical path diagram of a variant of the vehicle trim component of the ninth embodiment.
- FIGURE 17A: is an optical path diagram of the vehicle trim component of the tenth embodiment.
- FIGURE 17B: is an optical path diagram of a variant of the vehicle trim component of the tenth embodiment.
- FIGURE 18A: is an optical path diagram of the vehicle trim component of the eleventh embodiment.
- FIGURE 18B: is an optical path diagram of a variant of the vehicle trim component of the eleventh embodiment.
- FIGURE 19: illustrates a schematic bottom surface of a transparent frame.
- FIGURE 20: illustrates another schematic bottom surface of a transparent frame.
- FIGURE 21: illustrates yet another schematic bottom surface of a transparent frame.
- FIGURE 22: illustrates yet another schematic bottom surface of a transparent frame.
- FIGURE 23: illustrates yet another schematic bottom surface of a transparent frame.

### DESCRIPTION

Preferred embodiments of the present disclosure are given below with reference to the accompanying drawings, and are described in detail.

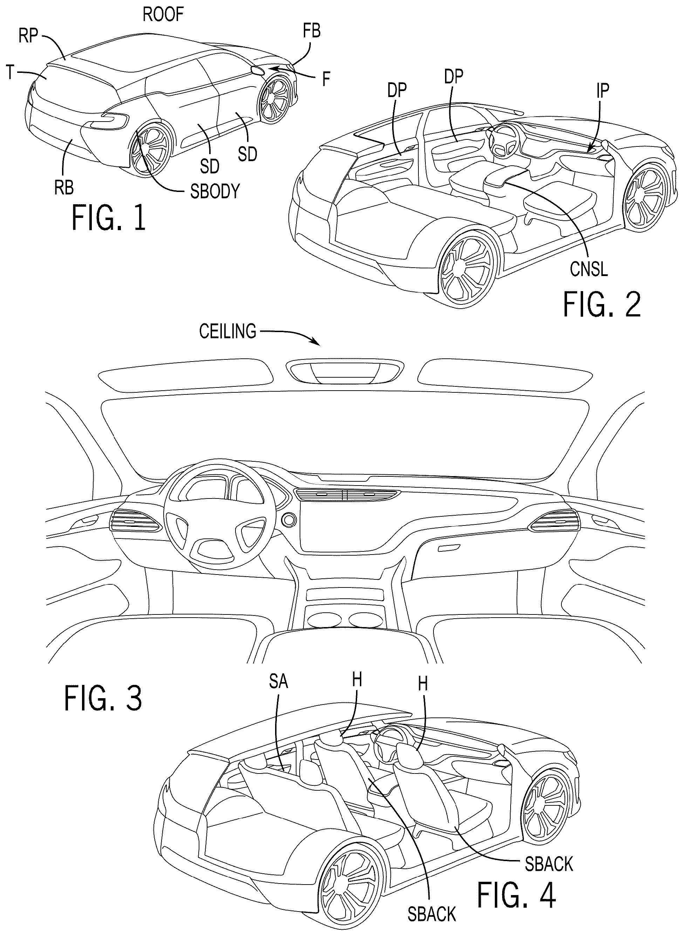

As shown in FIG. 1, the vehicle trim component according to the present disclosure is mounted on the exterior of a vehicle, which may be specifically applied to a front bumper FB including a grille, a rear bumper RB, an exterior roof ROOF, a trim RP, a trim panel F, a tailgate T, a side door SD, or a side body SBODY. As shown in FIG.s 2-4, the vehicle trim component according to the present disclosure is mounted on the vehicle's interior, which may be specifically applied to an instrument panel IP, a front or rear door DP or a central control CNSL. They may also be applied to a vehicle ceiling CEILING to provide features such as a starry sky, or may be applied to a headrest H, a seat armrest SA, or a seat back SBACK.

### Exemplary Embodiment 1

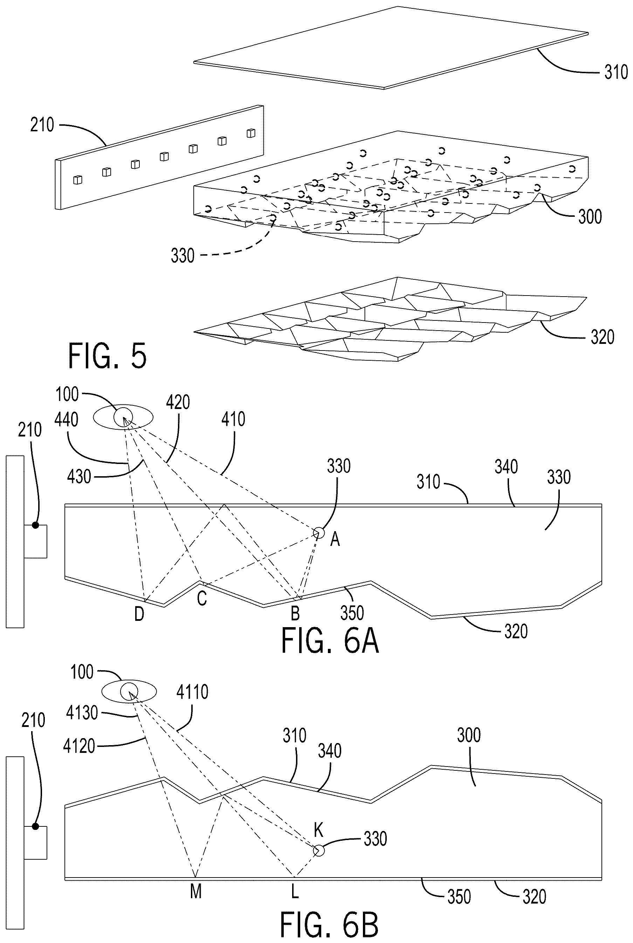

As shown in FIG. 5, the vehicle trim component according to the present embodiment includes a side-lit light source 210, a transparent frame 300, a semi-transreflective layer 310, a total reflection layer 320 and an optical pattern 330 wherein the top surface of the transparent frame 300 is a plane, and its bottom surface is a three-dimensional surface with uneven height; the semi-transreflective layer 310 is attached to the plane of the transparent frame 300, the total reflection layer 320 is attached to the three-dimensional surface with uneven height of the transparent frame 300, the optical pattern 330 is formed inside the transparent frame 300, and the side-lit light source 210 is located on a side of the transparent frame 300 so as to illuminate the transparent frame 300. In particular, the bottom surface of the transparent frame 300 (i.e. the surface compounded to the total reflection layer 320) is a three-dimensional surface with uneven height, and a three-dimensional reflective surface with uneven height is provided by the total reflection layer 320. By means of the irregular arrangement of height and combined with the semi-transreflective layer 310, the effect of random arrangement of the optical pattern 330 is presented, that is, a random depth-of-field effect is observable by a human eye. Specifically, the optical pattern 330 is illuminated by the side-lit light source 210, and the illuminated light undergoes multiple attenuated reflections and transmissions between the total reflection layer 320 and the semi-transreflective layer 310. Since the total reflection layer 320 is a three-dimensional surface with uneven height, the reflected and transmitted light presents an irregular optical path, so that an image of the reflected light of the optical pattern 330 on a certain plane in an optical transmission path undergoing multiple attenuated reflections and transmissions is observable at the same observation position, thereby forming a randomly arranged visual depth-of-field effect, and the change of the observation position makes the observed optical pattern 330 to change irregularly.

The side-lit light source 210 may be a PCB light panel with LED lamp beads as shown in FIG. 5, or may be a light guide strip, a light guide plate, a diffusion film, a diffusion plate, a light-emitting film, or a light-emitting fiber capable of emitting light after being irradiated by the light source. It should be understood that, by programming a control program for a plurality of LEDs or other light units constituting the light source in the side-lit light source 210, the side-lit light source 210 is controlled to maintain overall normally-on or overall brightness change or overall color change in a predetermined manner, so that an overall static or overall dynamic depth-of-field light effect may be produced. A plurality of LEDs or other light units constituting the light source in the side-lit light source 210 may also be programmed to control the light source to perform local brightness change and color change in a predetermined manner, so as to achieve a local dynamic depth-of-field light effect. If all of the LEDs or the light units on the side-lit light source 210 are fully lit with uniform light color and brightness, all of the optical patterns 330 in the transparent frame 300 will be illuminated simultaneously, and an overall static depth-of-field light effect is formed by the multiple attenuated optical radiations and transmissions as described above. If all of the LEDs or light units on the side-lit light source 210 are in an overall bright-dark change or color change, all of the optical patterns 330 in the transparent frame 300 will be illuminated simultaneously with the change of the overall brightness or light color of the light source 210, and the overall dynamic depth-of-field light effect is formed by the multiple attenuated optical radiations and transmissions as described above. If all of the LEDs or light units on the side-lit light source 210 change in brightness and color according to a certain regular order or locally by a program, the optical pattern 330 will be partially illuminated with local change along with the change of the light source 210, and a locally dynamic depth-of-field light effect is formed by the multiple attenuated optical radiations and transmissions as described above. It should be understood that the light inlet of the system may also be directly located in the transparent frame 300. By embedding LED point light sources within the in-mold circuitry, which is not limited to side incident light, it is also feasible to integrate the light source directly inside the transparent frame 300, provided that the interior of the transparent frame 300 is illuminated. In addition, according to the arrangement position of the vehicle trim component, the light inlet of the system may also be ambient natural light that is directly introduced.

The transparent frame 300 is a single piece formed by means of thick-wall injection molding (usually with a wall thickness of 1 mm -11 mm), and the material thereof includes, but is not limited to, transparent injection-molding materials such as PC (polycarbonate), PMMA (polymethyl methacrylate), etc. and its color can be colorless transparent or colored transparent.

The semi-transreflective layer 310 may be compounded on a 2D plane or a 2.5D curved surface of the top of the transparent frame 300 by pasting a semi-transreflective film, spraying/brushing a semi-transreflective coating, PVD (physical vapor deposition), or attaching a part having semi-transreflective property to the top surface 340 of the transparent frame.

The total reflection layer 320 may be disposed on the bottom surface of the transparent frame 300 by spraying, screen printing, film lamination, electroplating, hot stamping or PVD processes, or three-dimensional freeform surfaces of the bottom surface of the transparent frame 300 may be microscopically configured into an optical total reflection, or the total reflection layer 320 may be disposed on the transparent frame 300 by attaching an additional part having total reflection property to the bottom surface of the transparent frame 300.

The optical pattern 330 is achieved by printing, etching, laser engraving, forming air bubbles, or insert injection molding reflective materials or a component inside the transparent frame 300.

As shown in FIG. 6A, the light is incident into the transparent frame 300 through the side-lit light source 210, and the light will be reflected and diffracted in each direction when propagating in the transparent frame 300 and encountering the optical pattern 330. The reflected and diffracted light will be totally reflected if it encounters the total reflection layer 320 of the bottom surface 350 of the transparent frame 300 during propagation. If the reflected and diffracted light encounters the semi-transreflective layer 310 of the top surface 340 of the transparent frame 300 during propagation, part of the light will be transmitted through the semi-transreflective layer 310, and part of the light will be reflected by the semi-transreflective layer 310 back to the inside of the transparent frame 300. By adopting the optical total reflection mechanism of the total reflection layer 320 and the mechanism of partial light reflection and partial light transmission of the semi-transreflective layer 310, and since the bottom surface 350 of the transparent frame 300 is a three-dimensional surface with uneven height, a plurality of lights 410, 420, 430, 440, etc. on different and irregularly arranged light propagation paths are received at the same observation position 100, so that the optical patterns at a plurality of positions A, B, C, D, etc. are visible at the observation position 100, realizing the random and repeated entry of the designed optical pattern 330 of the transparent frame 300 into the sight line, thereby achieving a randomly arranged visual depth-of-field effect by attenuation and transmission by means of different light paths.

In the variant shown in FIG. 6B, the top surface of the transparent frame 300 is a three-dimensional surface with uneven height, and its bottom surface is a plane; the semi-transreflective layer 310 is attached to the three-dimensional surface with uneven height of the transparent frame 300, and the total reflection layer 320 is attached to the plane of the transparent frame 300. The light is incident into the transparent frame 300 through the side-lit light source 210, and the light will be reflected and diffracted in each direction when propagating in the transparent frame 300 and encountering the optical pattern 330. The reflected and diffracted light will be totally reflected if it encounters the total reflection layer 320 of the bottom surface 350 of the transparent frame 300 during propagation. If the reflected and diffracted light encounters the semi-transreflective layer 310 of the top surface 340 of the transparent frame 300 during propagation, part of the light will be transmitted through the semi-transreflective layer 310, and part of the light will be reflected by the semi-transreflective layer 310 back to the inside of the transparent frame 300. By adopting the optical total reflection mechanism of the total reflection layer 320 and the mechanism of partial light reflection and partial light transmission of the semi-transreflective layer 310, and since the top surface 340 of the transparent frame 300 is a three-dimensional surface with uneven height, a plurality of lights 4110, 4120, 4130, etc. on different and irregularly arranged light propagation paths are received at the same observation position 100, so that the optical patterns at a plurality of positions K, L, M, etc. are visible at the observation position 100, realizing the random and repeated entry of the designed optical pattern 330 of the transparent frame 300 into the sight line, thereby achieving a randomly arranged visual depth-of-field effect by attenuation and transmission by means of different light paths.

### Exemplary Embodiment 2

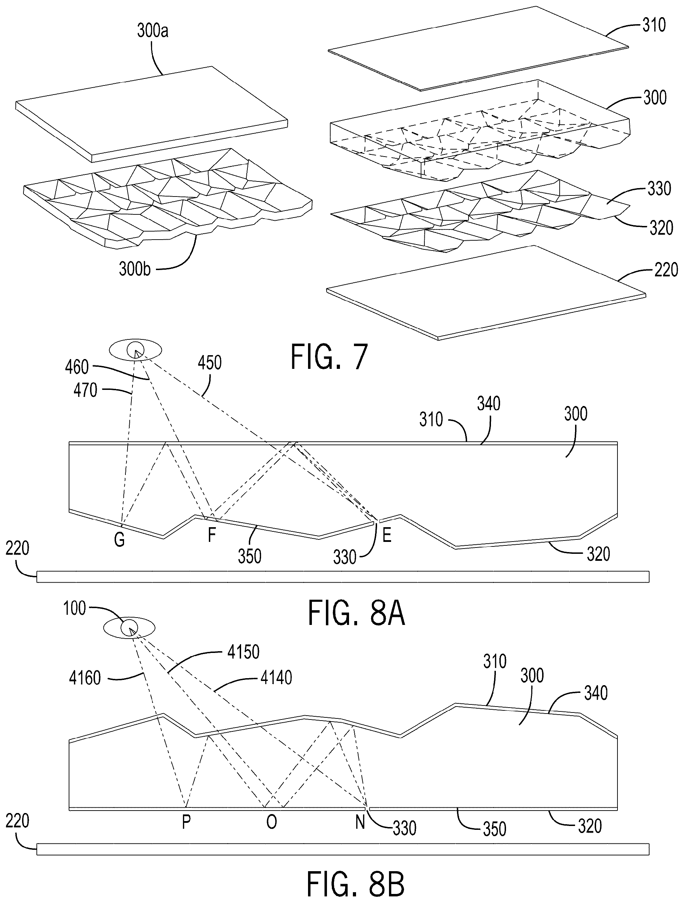

As shown in FIG. 7, the vehicle trim component according to the present embodiment includes a direct-lit light source 220, a transparent frame 300, a semi-transreflective layer 310, a total reflection layer 320, and an optical pattern 330 wherein the top surface of the transparent frame 300 is a plane, and its bottom surface is a three-dimensional surface with uneven height; the semi-transreflective layer 310 is attached to the plane of the transparent frame 300, the total reflection layer 320 is attached to the three-dimensional surface with uneven height of the transparent frame 300, and the optical pattern 330 is a light-transmitting hollow structure formed on the total reflection layer 320. The direct-lit light source 220 is located on the side of the total reflection layer 320 away from the semi-transreflective layer 310 so as to illuminate the transparent frame 300. In particular, the bottom surface of the transparent frame 300 (i.e. the surface compounded to the total reflection layer 320) is a three-dimensional surface with uneven height, and a three-dimensional reflective surface with uneven height is provided by the total reflection layer 320. By means of the irregular arrangement of height and combined with the semi-transreflective layer 310, the effect of random arrangement is presented, that is, a random depth-of-field effect is observable by a human eye. Specifically, the optical pattern 330 is illuminated by the direct-lit light source 220, and the illuminated light undergoes multiple attenuated reflections and transmissions between the total reflection layer 320 and the semi-transreflective layer 310. Since the total reflection layer 320 is a three-dimensional surface with uneven height, the reflected and transmitted light presents an irregular optical path, so that an image of the reflected light of the optical pattern 330 on a certain plane in an optical transmission path undergoing multiple attenuated reflections and transmissions is observable at the same observation position, thereby forming a randomly arranged visual depth-of-field effect.

The direct-lit light source 220 may be a matrix LED PCB light panel, or may be a light guide strip, a light guide plate, a diffusion film, a diffusion plate, a light-emitting film, or a light-emitting fiber capable of emitting light after being irradiated by the light source. It should be understood that, by programming a control program for a plurality of LEDs or other light units constituting the light source in the direct-lit light source 220, the direct-lit light source 220 is controlled to maintain overall normally-on or overall brightness change or overall color change in a predetermined manner, so that an overall static or overall dynamic depth-of-field light effect may be produced. A plurality of LEDs or other light units constituting the light source in the direct-lit light source 220 may also be programmed to control the light source to perform local brightness change and color change in a predetermined manner, so as to achieve a local dynamic depth-of-field light effect. If all of the LEDs or the light units on the direct-lit light source 220 are fully lit with uniform light color and brightness, all of the optical patterns 330 will be illuminated simultaneously, and an overall static depth-of-field light effect is formed by the multiple attenuated optical radiations and transmissions as described above. If all of the LEDs or light units on the direct-lit light source 220 are in an overall bright-dark change or color change, all of the optical patterns 330 will be illuminated simultaneously with the change of the overall brightness or light color of the direct-lit light source 220, and the overall dynamic depth-of-field light effect is formed by the multiple attenuated optical radiations and transmissions as described above. If all of the LEDs or light units on the direct-lit light source 220 change in brightness and color according to a certain regular order or locally by a program, the optical pattern 330 will be partially illuminated with local change along with the change of the light source 220, and a locally dynamic depth-of-field light effect is formed by the multiple attenuated optical radiations and transmissions as described above. It should be understood that the direct-lit light source 220 may be a surface light source, or may be a point light source, provided that part of the light of the light source may pass through the hollow structure on the total reflection layer 320.

The transparent frame 300 is a single piece formed by means of thick-wall injection molding (usually with a wall thickness of 1 mm to 11 mm), and the material thereof includes, but is not limited to, a transparent injection molding material such as PC and PMMA, and its color can be colorless transparent or colored transparent.

The semi-transreflective layer 310 may be compounded on a 2D plane or a 2.5D curved surface of the top of the transparent frame 300 by pasting a semi-transreflective film, spraying/brushing a semi-transreflective coating, PVD, or attaching a part having semi-transreflective property to the top surface 340 of the transparent frame.

The total reflection layer 320 may be disposed on the bottom surface of the transparent frame 300 by spraying, screen printing, film lamination, electroplating, hot stamping or PVD processes, or three-dimensional freeform surfaces of the bottom surface of the transparent frame 300 may be microscopically configured into an optical total reflection, or the total reflection layer 320 may be disposed on the transparent frame 300 by attaching an additional part having total reflection property to the bottom surface of the transparent frame 300.

The optical pattern 330 is achieved by engraving and perforating, punching, partially masking with a total reflection surface treatment (in this case, assuming that the substrate of the total reflection surface is pure transparent or semi-transparent, when subjected to masking and a total reflection surface treatment, the masked region is light-transmissive due to being not processed by the total reflection treatment), or printing a direct-lit light-transmitting dot, line or surface pattern on the total reflection layer 320 disposed on the bottom surface of the transparent frame 300. The cross-section of the specific hollowed structure may be circular, triangular or any desired shape.

Since the optical pattern 330 is achieved on the total reflection layer 320, in one variant of the present embodiment, the transparent frame 300 is replaced by an upper transparent frame 300a and a lower transparent frame 300b as shown in FIG. 7. The top surface or the bottom surface of the upper transparent frame 300a is disposed on the semi-transreflective layer 310, and the top surface or the bottom surface of the lower transparent frame 300b is disposed on the total reflection layer 320. The upper transparent frame 300a and the lower transparent frame 300b herein are formed by ordinary injection molding (usually with a wall thickness of 1 mm -11 mm), and the materials thereof may be transparent injection molding materials including but not limited to PC, PMMA, etc. The color of the upper transparent frame 300a may be colorless transparent or colored transparent, and the color of the lower transparent frame 300b may be colorless transparent or colored transparent or colorless semi-transparent or colored semi-transparent. It should be understood that the combination of the upper transparent frame 300a and the lower transparent frame 300b is equivalent to the thick-wall injection-molded transparent frame 300, but the upper transparent frame 300a and the lower transparent frame 300b can be processed using an injection-molding wall thickness of a typical plastic part, and they are relatively freely arranged, so as to adapt to requirements such as weight, spatial arrangement, and cost of different using occasions.

In this variant, the lower frame 300b may also be a non-transparent piece, and its color may be any color which is non-transparent. In this case, the total reflection layer 320 is disposed on the top surface of the lower frame 300b, and at this time, the optical pattern 330 may be achieved by forming an opening in the assembly after the lower frame 300b and the total reflection layer 320 are disposed on each other. An implementation of the opening may be directly performing die cutting or laser opening on the assembly after the lower frame 300b and the total reflection layer 320 are disposed on each other, or may first implementing an opening in the lower frame 300b through a mold when the lower frame 300b is injection molded, and the total reflection layer 320 may also undergo a light-transmission treatment at a corresponding position and then be combined with the lower frame 300b. In this case, the light- transmission treatment of the total reflection layer 320 may be, for example, a screen-printed light transmission, a perforation light transmission, a laser engraving, or even since the lower frame 300b has been achieved an opening during injection molding, and when the total reflection layer 320 and the lower frame 300b are disposed on each other by means of a process such as PVD and electroplating, etc., the opening of the corresponding position may be automatically formed.

As shown in FIG. 8A, the light is incident into the transparent frame 300 through the direct-lit light source 220. The light passing through the optical pattern 330 will be totally reflected if it encounters the total reflection layer 320 of the bottom surface 350 of the transparent frame 300 during propagation. If the light encounters the semi-transreflective layer 310 of the top surface 340 of the transparent frame 300 during propagation, part of the light will be transmitted through the semi-transreflective layer 310, and part of the light will be reflected by the semi-transreflective layer 310 back to the inside of the transparent frame 300. By adopting the optical total reflection mechanism of the total reflection layer 320 and the mechanism of partial light reflection and partial light transmission of the semi-transreflective layer 310, and since the bottom surface 350 of the transparent frame 300 is a three-dimensional surface with uneven height, a plurality of lights 450, 460, 470, etc. on different and irregularly arranged light propagation paths are received at the same observation position 100, so that the optical patterns at a plurality of positions E, F, G, etc. are visible at the observation position 100, realizing the random and repeated entry of the designed optical pattern 330 of the total reflection layer 320 into the sight line by the above mechanisms, thereby achieving a randomly arranged visual depth-of-field effect by attenuation and transmission by means of different light paths.

In the variant shown in FIG. 8B, the top surface of the transparent frame 300 is a three-dimensional surface with uneven height, and its bottom surface is a plane; the semi-transreflective layer 310 is attached to the three-dimensional surface with uneven height of the transparent frame 300, the total reflection layer 320 is attached to the plane of the transparent frame 300. The light is incident into the transparent frame 300 through the direct-lit light source 220. The light passing through the optical pattern 330 will be totally reflected if it encounters the total reflection layer 320 of the bottom surface 350 of the transparent frame 300 during propagation. If the light encounters the semi-transreflective layer 310 of the top surface 340 of the transparent frame 300 during propagation, part of the light will be transmitted through the semi-transreflective layer 310, and part of the light will be reflected by the semi-transreflective layer 310 back to the inside of the transparent frame 300. By adopting the optical total reflection mechanism of the total reflection layer 320 and the mechanism of partial light reflection and partial light transmission of the semi-transreflective layer 310, and since the top surface 340 of the transparent frame 300 is a three-dimensional surface with uneven height, a plurality of lights 4140, 4150, 4160, etc. on different and irregularly arranged light propagation paths are received at the same observation position 100, so that the optical patterns at a plurality of positions P, O, N, etc. are visible at the observation position 100, realizing the random and repeated entry of the designed optical pattern 330 of the total reflection layer 320 into the sight line, thereby achieving a randomly arranged visual depth-of-field effect by attenuation and transmission by means of different light paths.

### Exemplary Embodiment 3

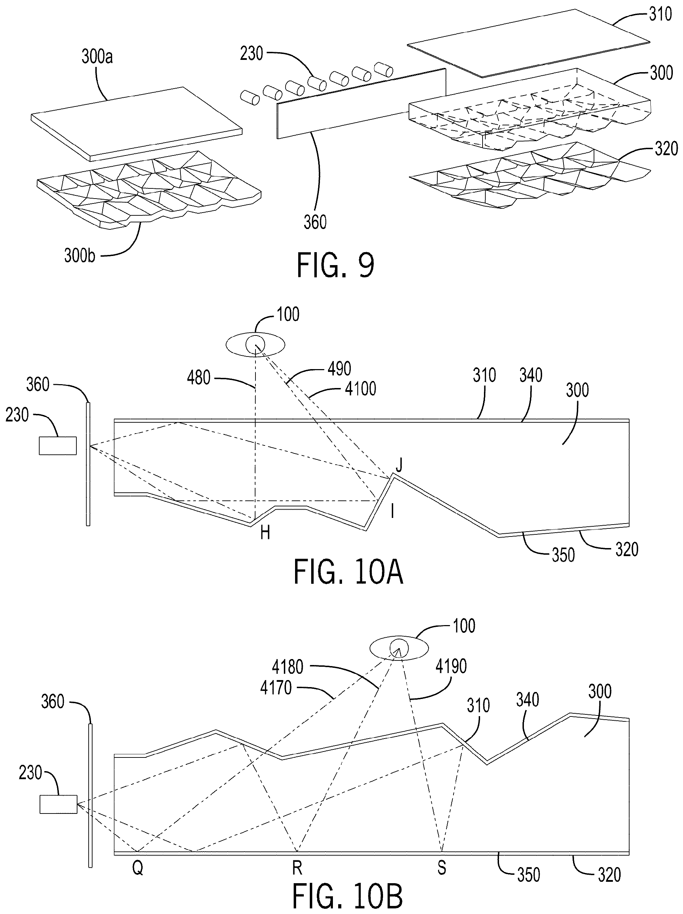

As shown in FIG. 9, the vehicle trim component according to the present embodiment includes a coherent light source 230, a transparent frame 300, a semi-transreflective layer 310, a total reflection layer 320, an optical pattern 330, and a grating film 360 wherein the top surface of the transparent frame 300 is a plane, and its bottom surface is a three-dimensional surface with uneven height; the semi-transreflective layer 310 is attached to the plane of the transparent frame 300, and the total reflection layer 320 is attached to the three-dimensional surface with uneven height of the transparent frame 300. The optical pattern 330 is provided by the grating film 360 arranged on a side of the transparent frame 300, and the coherent light source 230 is located behind the grating film 360 to illuminate the grating film 360 and the transparent frame 300. When the coherent light emitted by the coherent light source 230 continues to propagate in the form of coherent light along a plurality of scattering directions after passing through the grating film 360, and any coherent light propagating in the scattering directions enters a human eye after being reflected on a plane, the human eyes can see the optical pattern set based on the grating film 360. In particular, the bottom surface of the transparent frame 300 (i.e. the surface compounded to the total reflection layer 320) is a three-dimensional surface with uneven height, and a three-dimensional reflective surface with uneven height is provided by the total reflection layer 320. By means of the irregular arrangement of height and combined with the semi-transreflective layer 310, the effect of random arrangement is presented, that is, a random visual depth-of-field effect is observable by a human eye. Specifically, the coherent light with the optical pattern 330 is emitted and propagated between the total reflection layer 320 and the semi-transreflective layer 310 to produce multiple attenuated reflections and transmissions. Since the total reflection layer 320 is a three-dimensional surface with uneven height, the reflected and transmitted light presents an irregular optical path, so that an image of the reflected light of the coherent light with optical pattern 330 on a certain plane in an optical transmission path undergoing multiple attenuated reflections and transmissions is observable at the same observation position, thereby forming a randomly arranged visual depth-of-field effect.

The coherent light source 230 may be a laser emitter of a visible light band or other visible coherent light. If all of the coherent light sources 230 are fully lit with uniform light color and brightness, the optical pattern formed in the transparent frame after all of the coherent light sources 230 pass through the grating film 360 will be seen by a human eye simultaneously, and the overall static depth-of-field effect is formed through the multiple attenuated optical radiations and transmissions as described above. If all of the coherent light sources 230 are in an overall bright-dark change or color change, the optical pattern formed in the transparent frame after all of the coherent light sources 230 pass through the grating film 360 changes overall in brightness or light color, and the overall dynamic depth-of-field effect is formed through the multiple attenuated optical radiations and transmissions as described above. If the coherent light sources 230 change in brightness and color according to a certain regular order or locally by a program, the optical pattern formed in the transparent frame after the coherent light sources 230 pass through the grating film 360 will also be seen by a human eye according to a certain regular order or local brightness, and the local dynamic depth-of-field light effect is formed through the multiple attenuated optical radiations and transmissions as described above.

The transparent frame 300 is a single piece formed by means of thick-wall injection molding (usually with a wall thickness of 1 mm to 11 mm), and the material thereof includes, but is not limited to, a transparent injection molding material such as PC and PMMA, and its color can be colorless transparent or colored transparent.

The semi-transreflective layer 310 may be compounded on a 2D plane or a 2.5D curved surface of the top of the transparent frame 300 by pasting a semi-transreflective film, spraying/brushing a semi-transreflective coating, PVD, or attaching a part having semi-transreflective property to the top surface 340 of the transparent frame.

The total reflection layer 320 may be disposed on the bottom surface of the transparent frame 300 by spraying, screen printing, film lamination, electroplating, hot stamping or PVD processes, or three-dimensional freeform surfaces of the bottom surface of the transparent frame 300 may be microscopically configured into an optical total reflection, or the total reflection layer 320 may be disposed on the transparent frame 300 by attaching an additional part having total reflection property to the bottom surface of the transparent frame 300.

The optical pattern 330 is designed in the grating film 360. When the coherent light propagating in a single beam and in a single direction passes through the grating film, the coherent light will continue to propagate in the form of coherent light along a plurality of scattering directions, and the coherent light at this time will carry the optical pattern. When any beam of the coherent light propagating in the scattering directions is reflected on one plane and enters a human eye, the human eye can see the optical pattern designed based on the grating film 360.

Since the optical pattern 330 is achieved by the grating film 360, and the coherent light passing through the grating film 360 has the optical pattern 330 and is reflected on the plane and enters the human eye, in a variant of the present embodiment, the transparent frame 300 is replaced by an upper transparent frame 300a and a lower transparent frame 300b as shown in FIG. 9. The top surface or the bottom surface of the upper transparent frame 300a is disposed on the semi-transreflective layer 310, and the top surface or the bottom surface of the lower transparent frame 300b is disposed on the total reflection layer 320. The upper transparent frame 300a and the lower transparent frame 300b herein are formed by ordinary injection molding (usually with a wall thickness of 1 mm -11 mm), and the materials thereof may be transparent injection molding materials including but not limited to PC, PMMA, etc. The color of the upper transparent frame 300a may be colorless transparent or colored transparent, and the color of the lower transparent frame 300b may be colorless transparent or colored transparent or colorless semi-transparent or colored semi-transparent. It should be understood that the combination of the upper transparent frame 300a and the lower transparent frame 300b is equivalent to the thick-wall injection-molded transparent frame 300, but the upper transparent frame 300a and the lower transparent frame 300b can be processed using an injection-molding wall thickness of a typical plastic part, and they are relatively freely arranged, so as to adapt to requirements such as weight, spatial arrangement, and cost of different using occasions.

In this variant, the lower frame 300b may also be a non-transparent piece, and its color may be any color which is non-transparent. In this case, the total reflection layer 320 is disposed on the top surface of the lower frame 300b.

As shown in FIG. 10A, the light emitted by the coherent light source 230 is coherent light propagating linearly along a direction aligned with the light source. When the coherent light passes through the grating film 360 with the optical pattern, the coherent light originally propagating along the direction aligned with the light source will continue to propagate in the form of coherent light along a plurality of scattering directions, and the shape of the light will carry the optical pattern of the grating film 360. At this time, if any beam of the coherent light propagating along the plurality of scattering directions enters a human eye after being reflected on a certain plane, the human eye can see the specific optical pattern set based on the grating film 360. After the single-beam coherent light emitted by the coherent light source 230 passes through the grating film 360, the multi-beam coherent light propagating along the plurality of scattering directions enters the transparent frame 300 for propagation. If any beam of the coherent light encounters the total reflection layer 320 of the bottom surface 350 of the transparent frame 300 during propagation, it will be totally reflected, and if the reflected light enters a human eye, the human eye can see the specific optical pattern set based on the grating film 360. If any beam of the coherent light encounters the semi-transreflective layer 310 of the top surface 340 of the transparent frame 300 during propagation, part of the coherent light is transmitted through the semi-transreflective layer 310, and part of the coherent light is reflected by the semi-transreflective layer 310 back to the inside of the transparent frame 300. If the transmitted light reflected from the total reflection layer 350 enters a human eye, the human eye will see the optical pattern set based on the grating film 360. By adopting the optical total reflection mechanism of the total reflection layer 320 and the mechanism of partial light reflection and partial light transmission of the semi-transreflective layer 310, and since the bottom surface 350 of the transparent frame 300 is a three-dimensional surface with uneven height, a plurality of lights 480, 490, 4100, etc. on different and irregularly arranged light propagation paths are received at the same observation position 100, so that the optical patterns at a plurality of positions H, I, and J, etc. are visible at the observation position 100, realizing the random and repeated entry of the designed optical pattern 330 in the grating film 360 into the sight line, thereby achieving a randomly arranged visual depth-of-field effect by attenuation and transmission by means of different light paths.

In the variant shown in FIG. 10B, the top surface of the transparent frame 300 is a three-dimensional surface with uneven height, and its bottom surface is a plane; the semi-transreflective layer 310 is attached to the three-dimensional surface with uneven height of the transparent frame 300, the total reflection layer 320 is attached to the plane of the transparent frame 300. The light emitted by the coherent light source 230 is coherent light propagating linearly along a direction aligned with the light source. When the coherent light passes through the grating film 360 with the optical pattern, the coherent light originally propagating along the direction aligned with the light source will continue to propagate in the form of coherent light along a plurality of scattering directions, and the shape of the light will carry the optical pattern of the grating film 360. At this time, if any beam of the coherent light propagating along the plurality of scattering directions enters a human eye after being reflected on a certain plane, the human eye can see the specific optical pattern set based on the grating film 360. After the single-beam coherent light emitted by the coherent light source 230 passes through the grating film 360, the multi-beam coherent light propagating along the plurality of scattering directions enters the transparent frame 300 for propagation. If any beam of the coherent light encounters the total reflection layer 320 of the bottom surface 350 of the transparent frame 300 during propagation, it will be totally reflected, and if the reflected light enters a human eye, the human eye can see the specific optical pattern set based on the grating film 360. If any beam of the coherent light encounters the semi-transreflective layer 310 of the top surface 340 of the transparent frame 300 during propagation, part of the coherent light is transmitted through the semi-transreflective layer 310, and part of the coherent light is reflected by the semi-transreflective layer 310 back to the inside of the transparent frame 300. If the transmitted light reflected from the total reflection layer 350 enters a human eye, the human eye will see the optical pattern set based on the grating film 360. By adopting the optical total reflection mechanism of the total reflection layer 320 and the mechanism of partial light reflection and partial light transmission of the semi-transreflective layer 310, and since the top surface 340 of the transparent frame 300 is a three-dimensional surface with uneven height, a plurality of lights 4170, 4180, 4190, etc. on different and irregularly arranged light propagation paths are received at the same observation position 100, so that the optical patterns at a plurality of positions Q, R, and S, etc. are visible at the observation position 100, realizing the random and repeated entry of the designed optical pattern 330 in the grating film 360 into the sight line, thereby achieving a randomly arranged visual depth-of-field effect by attenuation and transmission by means of different light paths.

### Exemplary Embodiment 4

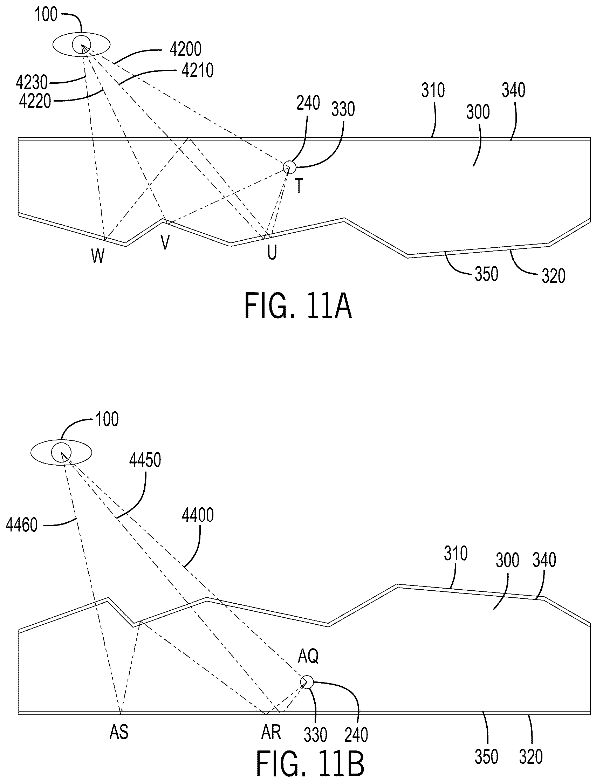

As shown in FIG. 11A and FIG. 11B, the vehicle trim component according to the present embodiment includes an in-mold point light source 240, a transparent frame 300, a semi-transreflective layer 310, a total reflection layer 320, and an optical pattern 330 wherein the top surface of the transparent frame 300 is a plane, and its bottom surface is a three-dimensional surface with uneven height; the semi-transreflective layer 310 is attached to the plane of the transparent frame 300, and the total reflection layer 320 is attached to the three-dimensional surface with uneven height of the transparent frame 300. The in-mold point light source 240 is formed inside the transparent frame 300, and forms the optical pattern 330 in the present embodiment. In particular, the bottom surface of the transparent frame 300 (i.e. the surface compounded to the total reflection layer 320) is a three-dimensional surface with uneven height, and a three-dimensional reflective surface with uneven height is provided by the total reflection layer 320. By means of the irregular arrangement of height and combined with the semi-transreflective layer 310, the effect of random arrangement of the optical pattern 330 is presented, that is, a random depth-of-field effect is observable by a human eye. Specifically, the in-mold point light source 240 located in the transparent frame 300 is used as a light source and also serves as the optical pattern 330, and the light emitted by itself serves as the optical pattern 330 to undergo multiple attenuated reflections and transmissions between the total reflection layer 320 and the semi-transreflective layer 310, and since the total reflection layer 320 is a three-dimensional surface with uneven height, the reflected and transmitted light presents an irregular optical path, so that an image of the reflected light of the optical pattern 330 on a certain plane in an optical transmission path undergoing multiple attenuated reflections and transmissions is observable at the same observation position, thereby forming a randomly arranged visual depth-of-field effect.

It should be understood that by programming the in-mold point light source 240, the in-mold point light source 240 is controlled to maintain normally-on or brightness change or color change in a predetermined manner, so that a static or dynamic depth-of-field effect may be produced.

The transparent frame 300 is a single piece formed by means of thick-wall injection molding (usually with a wall thickness of 1 mm -11 mm), and the material thereof includes, but is not limited to, a transparent injection molding material such as PC and PMMA, and its color can be colorless transparent or colored transparent.

The semi-transreflective layer 310 may be compounded on a 2D plane or a 2.5D curved surface of the top of the transparent frame 300 by pasting a semi-transreflective film, spraying/brushing a semi-transreflective coating, PVD, or attaching a part having semi-transreflective property to the top surface 340 of the transparent frame.

The total reflection layer 320 may be disposed on the bottom surface of the transparent frame 300 by spraying, screen printing, film lamination, electroplating, hot stamping or PVD processes, or three-dimensional freeform surfaces of the bottom surface of the transparent frame 300 may be microscopically configured into an optical total reflection, or the total reflection layer 320 may be disposed on the transparent frame 300 by attaching an additional part having total reflection property to the bottom surface of the transparent frame 300.

In a variant of the present embodiment, similar to the second and third embodiments, the transparent frame 300 may be replaced by an upper transparent frame 300a and a lower transparent frame 300b as shown in Figures 7 and 9, the same being not repeated herein. It should be understood that in the case that the single-piece transparent frame 300 is selected, the in-mold point light source 240 may be a light-emitting light source embedded in the transparent frame 300 implemented by a process such as insert injection molding, and in the case that the upper transparent frame 300a and the lower transparent frame 300b are selected, the in-mold point light source 240 may be a light-emitting light source placed between the upper transparent frame 300a and the lower transparent frame 300b.

As shown in FIG. 11A, the light is incident into the transparent frame 300 by the in-mold point light source 240 forming the optical pattern 330. The light with the optical pattern 330 will be totally reflected if it encounters the total reflection layer 320 of the bottom surface 350 of the transparent frame 300 during propagation. If the light encounters the semi-transreflective layer 310 of the top surface 340 of the transparent frame 300 during propagation, part of the light will be transmitted through the semi-transreflective layer 310, and part of the light will be reflected by the semi-transreflective layer 310 back to the inside of the transparent frame 300. By adopting the optical total reflection mechanism of the total reflection layer 320 and the mechanism of partial light reflection and partial light transmission of the semi-transreflective layer 310, and since the bottom surface 350 of the transparent frame 300 is a three-dimensional surface with uneven height, a plurality of lights 4200, 4210, 4220, 4230, etc. on different and irregularly arranged light propagation paths are received at the same observation position 100, so that the optical patterns at a plurality of positions T, U, V, W, etc. are visible at the observation position 100, realizing the random and repeated entry of the designed optical pattern 330 formed by the in-mold point light source 240 into the sight line, thereby achieving a randomly arranged visual depth-of-field effect by attenuation and transmission by means of different light paths.

In the variant shown in FIG. 11B, the top surface of the transparent frame 300 is a three-dimensional surface with uneven height, and its bottom surface is a plane; the semi-transreflective layer 310 is attached to the three-dimensional surface with uneven height of the transparent frame 300, the total reflection layer 320 is attached to the plane of the transparent frame 300. The light is incident into the transparent frame 300 by the in-mold point light source 240 forming the optical pattern 330. The light with the optical pattern 330 will be totally reflected if it encounters the total reflection layer 320 of the bottom surface 350 of the transparent frame 300 during propagation. If the light encounters the semi-transreflective layer 310 of the top surface 340 of the transparent frame 300 during propagation, part of the light will be transmitted through the semi-transreflective layer 310, and part of the light will be reflected by the semi-transreflective layer 310 back to the inside of the transparent frame 300. By adopting the optical total reflection mechanism of the total reflection layer 320 and the mechanism of partial light reflection and partial light transmission of the semi-transreflective layer 310, and since the top surface 340 of the transparent frame 300 is a three-dimensional surface with uneven height, a plurality of lights 4440, 4450, 4460, etc. on different and irregularly arranged light propagation paths are received at the same observation position 100, so that the optical patterns at a plurality of positions AQ, AR, AS, etc. are visible at the observation position 100, realizing the random and repeated entry of the designed optical pattern 330 formed by the in-mold point light source 240 into the sight line, thereby achieving a randomly arranged visual depth-of-field effect by attenuation and transmission by means of different light paths.

### Exemplary Embodiment 5

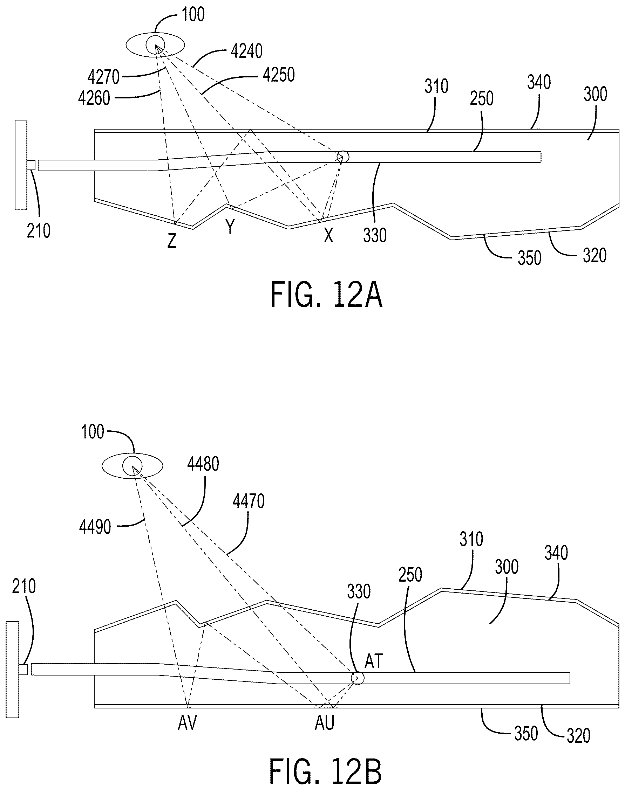

As shown in FIG. 12A and FIG. 12B, the vehicle trim component according to the present embodiment includes a side-lit light source 210, an in-mold light guide strip 250, a transparent frame 300, a semi-transreflective layer 310, a total reflection layer 320, and an optical pattern 330 wherein the top surface of the transparent frame 300 is a plane, and its bottom surface is a three-dimensional surface with uneven height; the semi-transreflective layer 310 is attached to the plane of the transparent frame 300, the total reflection layer 320 is attached to the three-dimensional surface with uneven height of the transparent frame 300, the side-lit light source 210 is located on a side of the transparent frame 300, the in-mold light guide strip 250 extends from the side-lit light source 210 to the inside of the transparent frame 300, and the optical pattern 330 is one or more light-emitting points formed on the in-mold light guide strip 250 and located in the transparent frame 300. In particular, the bottom surface of the transparent frame 300 (i.e. the surface compounded to the total reflection layer 320) is a three-dimensional surface with uneven height, and a three-dimensional reflective surface with uneven height is provided by the total reflection layer 320. By means of the irregular arrangement of height and combined with the semi-transreflective layer 310, the effect of random arrangement of the optical pattern 330 is presented, that is, a random depth-of-field effect is observable by a human eye. Specifically, the light emitted by the side-lit light source 210 irradiates the in-mold light guide strip 250, so that the in-mold light guide strip 250 emits light, and the light with the optical pattern 330 emitted by the in-mold light guide strip 250 undergoes multiple attenuated reflections and transmissions between the total reflection layer 320 and the semi-transreflective layer 310, and since the total reflection layer 320 is a three-dimensional surface with uneven height, the reflected and transmitted light presents an irregular optical path, so that an image of the reflected light of the optical pattern 330 on a certain plane in an optical transmission path undergoing multiple attenuated reflections and transmissions is observable at the same observation position, thereby forming a randomly arranged visual depth-of-field effect.

The side-lit light source 210 may be a PCB light panel with LED lamp beads, or may be a light guide strip, a light guide plate, a diffusion film, a diffusion plate, a light-emitting film, or a light-emitting fiber capable of emitting light after being irradiated by the light source. It should be understood that similar to the first embodiment, a plurality of LEDs or other light units constituting the light source in the side-lit light source 210 may be programmed to control the side-lit light source 210 to maintain normally-on or brightness change or color change in a predetermined manner, so that an overall static, overall dynamic, or locally dynamic depth-of-field light effect may be formed, which is not repeated herein.

The in-mold light guide strip 250 may be a common light guide strip, a soft light guide, an optical fiber, or the like.

The transparent frame 300 is a single piece formed by means of thick-wall injection molding (usually with a wall thickness of 1 mm -11 mm), and the material thereof includes, but is not limited to, a transparent injection molding material such as PC and PMMA, and its color can be colorless transparent or colored transparent.

The semi-transreflective layer 310 may be compounded on a 2D plane or a 2.5D curved surface of the top of the transparent frame 300 by pasting a semi-transreflective film, spraying/brushing a semi-transreflective coating, PVD, or attaching a part having semi-transreflective property to the top surface 340 of the transparent frame.

The total reflection layer 320 may be disposed on the bottom surface of the transparent frame 300 by spraying, screen printing, film lamination, electroplating, hot stamping or PVD processes, or three-dimensional freeform surfaces of the bottom surface of the transparent frame 300 may be microscopically configured into an optical total reflection, or the total reflection layer 320 may be disposed on the transparent frame 300 by attaching an additional part having total reflection property to the bottom surface of the transparent frame 300.

In a variant of the present embodiment, similar to the second and third embodiments, the transparent frame 300 may be replaced by an upper transparent frame 300a and a lower transparent frame 300b as shown in Figures 7 and 9, the same being not repeated herein. It should be understood that in the case that the single-piece transparent frame 300 is selected, the in-mold light guide strip 250 may be embedded in the transparent frame 300 by means of insert injection molding or 2K injection molding, and in the case that the upper transparent frame 300a and the lower transparent frame 300b are selected, the in-mold light guide strip 250 may be arranged between the upper transparent frame 300a and the lower transparent frame 300b.

As shown in FIG. 12A, the light is incident into the transparent frame 300 through the side-lit light source 210 and the in-mold light guide strip 250. The light with the optical pattern 330 formed on the in-mold light guide strip 250 will be totally reflected if it encounters the total reflection layer 320 of the bottom surface 350 of the transparent frame 300 during propagation. If the light encounters the semi-transreflective layer 310 of the top surface 340 of the transparent frame 300 during propagation, part of the light will be transmitted through the semi-transreflective layer 310, and part of the light will be reflected by the semi-transreflective layer 310 back to the inside of the transparent frame 300. By adopting the optical total reflection mechanism of the total reflection layer 320 and the mechanism of partial light reflection and partial light transmission of the semi-transreflective layer 310, and since the bottom surface 350 of the transparent frame 300 is a three-dimensional surface with uneven height, a plurality of lights 4240, 4250, 4260, 4270, etc. on different and irregularly arranged light propagation paths are received at the same observation position 100, so that the optical patterns at a plurality of positions X, Y, and Z, etc. are visible at the observation position 100, realizing the random and repeated entry of the designed optical pattern 330 on the in-mold light guide strip 250 into the sight line, thereby achieving a randomly arranged visual depth-of-field effect by attenuation and transmission by means of different light paths.

In the variant shown in FIG. 12B, the top surface of the transparent frame 300 is a three-dimensional surface with uneven height, and its bottom surface is a plane; the semi-transreflective layer 310 is attached to the three-dimensional surface with uneven height of the transparent frame 300, the total reflection layer 320 is attached to the plane of the transparent frame 300. The light is incident into the transparent frame 300 through the side-lit light source 210 and the in-mold light guide strip 250. The light with the optical pattern 330 formed on the in-mold light guide strip 250 will be totally reflected if it encounters the total reflection layer 320 of the bottom surface 350 of the transparent frame 300 during propagation. If the light encounters the semi-transreflective layer 310 of the top surface 340 of the transparent frame 300 during propagation, part of the light will be transmitted through the semi-transreflective layer 310, and part of the light will be reflected by the semi-transreflective layer 310 back to the inside of the transparent frame 300. By adopting the optical total reflection mechanism of the total reflection layer 320 and the mechanism of partial light reflection and partial light transmission of the semi-transreflective layer 310, and since the top surface 340 of the transparent frame 300 is a three-dimensional surface with uneven height, a plurality of lights 4470, 4480, 4490, etc. on different and irregularly arranged light propagation paths are received at the same observation position 100, so that the optical patterns at a plurality of positions AT, AU, and AV, etc. are visible at the observation position 100, realizing the random and repeated entry of the designed optical pattern 330 on the in-mold light guide strip 250 into the sight line, thereby achieving a randomly arranged visual depth-of-field effect by attenuation and transmission by means of different light paths.

### Exemplary Embodiment 6

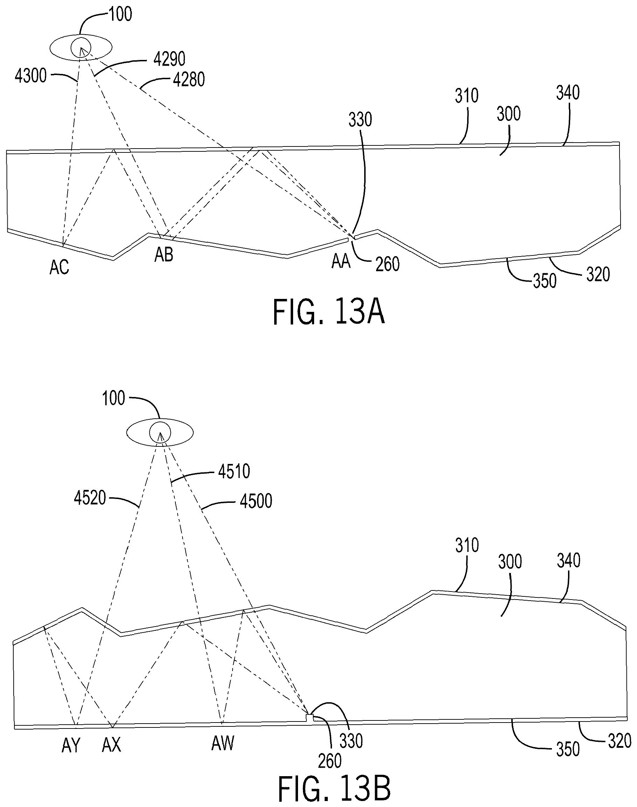

As shown in FIG. 13A and FIG. 13B, the vehicle trim component according to the present embodiment includes a conformal light-panel light source 260, a transparent frame 300, a semi-transreflective layer 310, a total reflection layer 320, and an optical pattern 330 wherein the top surface of the transparent frame 300 is a plane, and its bottom surface is a three-dimensional surface with uneven height; the semi-transreflective layer 310 is attached to the plane of the transparent frame 300, and the total reflection layer 320 is attached to the three-dimensional surface with uneven height of the transparent frame 300. The conformal light-panel light source 260 is disposed at the bottom of the transparent frame 300, and forms an optical pattern 330 in this embodiment. In particular, the bottom surface of the transparent frame 300 (i.e. the surface compounded to the total reflection layer 320) is a three-dimensional surface with uneven height, and a three-dimensional reflective surface with uneven height is provided by the total reflection layer 320. By means of the irregular arrangement of height and combined with the semi-transreflective layer 310, the effect of random arrangement of the optical pattern 330 is presented, that is, a random depth-of-field effect is observable by a human eye. Specifically, the conformal light-panel light source 260 provided at the bottom of the transparent frame 300 serves as a light source and also serves as the optical pattern 330, and the light emitted by itself serves as the optical pattern 330 to undergo multiple attenuated reflections and transmissions between the total reflection layer 320 and the semi-transreflective layer 310, and since the total reflection layer 320 is a three-dimensional surface with uneven height, the reflected and transmitted light presents an irregular optical path, so that an image of the reflected light of the optical pattern 330 on a certain plane in an optical transmission path undergoing multiple attenuated reflections and transmissions is observable at the same observation position, thereby forming a randomly arranged visual depth-of-field effect.

The conformal light-panel light source 260 may emit light via a light-emitting element on a rigid or flexible conformal light panel having a same profile of the bottom surface 350 of the transparent frame. This light serves as the light source and also serves as the optical pattern 330 to undergo multiple transmissions and reflections to produce a randomly arranged visual depth-of-field effect. The shape of the conformal light panel is the same as the profile of the bottom surface 350 of the transparent frame, and it is attached to the bottom surface of the transparent frame 300 by means of structural installation, glue, or insert injection molding. It should be understood that, similar to the previously described embodiments, a plurality of light-emitting elements of the conformal light-panel light source 260 may be programmed to control the conformal light-panel light source 260 to maintain normally-on or brightness change or color change in a predetermined manner, so that an overall static, overall dynamic, or locally dynamic visual depth-of-field effect may be produced. Similarities to the prior descriptions are not repeated here.

The transparent frame 300 is a single piece formed by means of thick-wall injection molding (usually with a wall thickness of 1 mm -11 mm), and the material thereof includes, but is not limited to, a transparent injection molding material such as PC and PMMA, and its color can be colorless transparent or colored transparent.

The semi-transreflective layer 310 may be compounded on a 2D plane or a 2.5D curved surface of the top of the transparent frame 300 by pasting a semi-transreflective film, spraying/brushing a semi-transreflective coating, PVD, or attaching a part having semi-transreflective property to the top surface 340 of the transparent frame.

The total reflection layer 320 may be disposed on the bottom surface of the transparent frame 300 by spraying, screen printing, film lamination, electroplating, hot stamping, or PVD processes, or three-dimensional freeform surfaces of the bottom surface of the transparent frame 300 may be microscopically configured into an optical total reflection, or the total reflection layer 320 may be disposed on the transparent frame 300 by attaching an additional part having total reflection property to the bottom surface of the transparent frame 300. In this embodiment, the total reflection layer 320 may also be formed on the mounting carrier of the conformal light-panel light source 260 (i.e. on the conformal light panel for mounting the conformal light-panel light source 260) by a process such as spraying, screen printing, film lamination, electroplating, hot stamping or PVD. Since the shape of the conformal light panel is the same as the profile of the bottom surface 350 of the transparent frame and it is attached to the bottom surface of the transparent frame 300 by means of structural installation, glue, or insert injection molding, the total reflection function on the bottom surface 350 of the transparent frame is achieved after attachment.

In a variant of the present embodiment, similar to the second and third embodiments, the transparent frame 300 may be replaced by an upper frame 300a and a lower frame 300b as shown in Figures 7 and 9, the same being not repeated herein. It should be understood that in the case that the upper frame 300a and the lower frame 300b are selected to be used, if the lower frame 300b is transparent, the conformal light panel with the conformal light-panel light source 260 and the total reflection layer 320 may be disposed on the top surface or the bottom surface of the lower frame 300b; and if the lower frame 300b is non-transparent, the conformal light panel with the conformal light-panel light source 260 and the total reflection layer 320 need to be disposed on the top surface of the lower frame 300b.

As shown in FIG. 13A, the light is incident into the transparent frame 300 through the conformal light-panel light source 260 forming the optical pattern 330. The light with the optical pattern 330 will be totally reflected if it encounters the total reflection layer 320 of the bottom surface 350 of the transparent frame 300 during propagation. If the light encounters the semi-transreflective layer 310 of the top surface 340 of the transparent frame 300 during propagation, part of the light will be transmitted through the semi-transreflective layer 310, and part of the light will be reflected by the semi-transreflective layer 310 back to the inside of the transparent frame 300. By adopting the optical total reflection mechanism of the total reflection layer 320 and the mechanism of partial light reflection and partial light transmission of the semi-transreflective layer 310, and since the bottom surface 350 of the transparent frame 300 is a three-dimensional surface with uneven height, a plurality of lights 4280, 4290, 4300, etc. on different and irregularly arranged light propagation paths are received at the same observation position 100, so that the optical patterns at a plurality of positions AA, AB, AC, etc. are visible at the observation position 100, realizing the random and repeated entry of the designed optical pattern 330 formed by the conformal light-panel light source 260 into the sight line, thereby achieving a randomly arranged visual depth-of-field effect by attenuation and transmission by means of different light paths.

In the variant shown in FIG. 13B, the top surface of the transparent frame 300 is a three-dimensional surface with uneven height, and its bottom surface is a plane; the semi-transreflective layer 310 is attached to the three-dimensional surface with uneven height of the transparent frame 300, and the total reflection layer 320 is attached to the plane of the transparent frame 300. The light with the optical pattern 330 will be totally reflected if it encounters the total reflection layer 320 of the bottom surface 350 of the transparent frame 300 during propagation. If the light encounters the semi-transreflective layer 310 of the top surface 340 of the transparent frame 300 during propagation, part of the light will be transmitted through the semi-transreflective layer 310, and part of the light will be reflected by the semi-transreflective layer 310 back to the inside of the transparent frame 300. By adopting the optical total reflection mechanism of the total reflection layer 320 and the mechanism of partial light reflection and partial light transmission of the semi-transreflective layer 310, and since the top surface 340 of the transparent frame 300 is a three-dimensional surface with uneven height, a plurality of lights 4500, 4510, 4520, etc. on different and irregularly arranged light propagation paths are received at the same observation position 100, so that the optical patterns at a plurality of positions AW, AX, AY, etc. are visible at the observation position 100, realizing the random and repeated entry of the designed optical pattern 330 formed by the conformal light-panel light source 260 into the sight line, thereby achieving a randomly arranged visual depth-of-field effect by attenuation and transmission by means of different light paths.

### Exemplary Embodiment 7

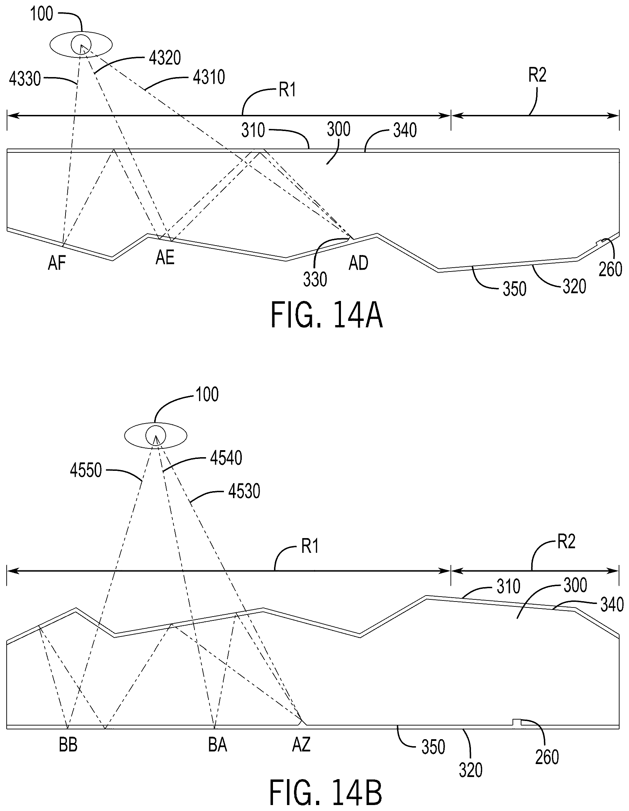

As shown in FIG. 14A and FIG. 14B, the vehicle trim component according to the present embodiment includes a conformal light-panel light source 260, a transparent frame 300, a semi-transreflective layer 310, a total reflection layer 320, and an optical pattern 330 wherein the top surface of the transparent frame 300 is a plane, and its bottom surface is a three-dimensional surface with uneven height; the semi-transreflective layer 310 is attached to the plane of the transparent frame 300, and the total reflection layer 320 is attached to the three-dimensional surface with uneven height of the transparent frame 300. The transparent frame 300 is divided into a light-emitting region R1 and a non-light-emitting region R2 wherein the light-emitting region R1 is defined as a region that needs to be functionally visible, and the non-light-emitting region R2 is defined as a region that is functionally invisible. The effect of visual concealment can be achieved through a method such as physical shielding, spraying, film lamination, or screen printing. The reflective optical pattern 330 is formed on the bottom surface 350 or the top surface 340 of the transparent frame, while the conformal light-panel light source 260 is disposed at the bottom of the transparent frame 300 and the arrangement position thereof is located in the non-light-emitting region R2. In particular, the bottom surface of the transparent frame 300 (i.e. the surface compounded to the total reflection layer 320) is a three-dimensional surface with uneven height, and a three-dimensional reflective surface with uneven height is provided by the total reflection layer 320. By means of the irregular arrangement of height and combined with the semi-transreflective layer 310, the effect of random arrangement of the optical pattern 330 is presented, that is, a random depth-of-field effect is observable by a human eye. Specifically, the optical pattern 330 is illuminated by the conformal light-panel light source 260, and the illuminated light propagates in the transparent frame 300 and undergoes multiple attenuated reflections and transmissions between the total reflection layer 320 and the semi-transreflective layer 310. Since the total reflection layer 320 is a three-dimensional surface with uneven height, the reflected and transmitted light presents an irregular optical path, so that an image of the reflected light of the optical pattern 330 on a certain plane in an optical transmission path undergoing multiple attenuated reflections and transmissions is observable at the same observation position, thereby forming a randomly arranged visual depth-of-field effect.

The conformal light-panel light source 260 emit light via a light-emitting element on a rigid or flexible conformal light panel having a same shape as the profile of the bottom surface 350 of the transparent frame. Since the conformal light-panel light source 260 is arranged in the non-light-emitting region R2, the light only serves as the light source. The shape of the conformal light panel is the same as the profile of the bottom surface 350 of the transparent frame, and it is attached to the bottom surface 350 of the transparent frame by means of structural installation, glue, or insert injection molding. It should be understood that, similar to the previously described embodiments, the multiple light-emitting elements of the conformal light panel light source 260 may be programmed via control software to maintain normally-on or brightness change or color change in a predetermined manner, so that an overall static, overall dynamic, or locally dynamic visual depth-of-field effect may be produced. Similarities to the prior descriptions are not repeated here.

The transparent frame 300 is a single piece formed by means of thick-wall injection molding (usually with a wall thickness of 1 mm -11 mm), and the material thereof includes, but is not limited to, a transparent injection molding material such as PC and PMMA, and its color can be colorless transparent or colored transparent.

The semi-transreflective layer 310 may be compounded on a 2D plane or a 2.5D curved surface of the top of the transparent frame 300 by pasting a semi-transreflective film, spraying/brushing a semi-transreflective coating, PVD, or attaching a part having semi-transreflective property to the top surface 340 of the transparent frame.

The total reflection layer 320 may be disposed on the bottom surface of the transparent frame 300 by spraying, screen printing, film lamination, electroplating, hot stamping, or PVD processes, or three-dimensional freeform surfaces of the bottom surface of the transparent frame 300 may be microscopically configured into an optical total reflection, or the total reflection layer 320 may be disposed on the transparent frame 300 by attaching an additional part having total reflection property to the bottom surface of the transparent frame 300. In this embodiment, the total reflection layer 320 may also be formed on the mounting carrier of the conformal light-panel light source 260 (i.e. on the conformal light panel for mounting the conformal light-panel light source 260) by a process such as spraying, screen printing, film lamination, electroplating, hot stamping or PVD. Since the shape of the conformal light panel is the same as the profile of the bottom surface 350 of the transparent frame and it is attached to the bottom surface of the transparent frame 300 by means of structural installation, glue, or insert injection molding, the total reflection function on the bottom surface 350 of the transparent frame is achieved after attachment.

The optical pattern 330 may be a partially concave or convex three-dimensional structure (which may not be specifically processed or may be subjected to local grinding, peeling, etc.) located on the bottom surface 350 or the top surface 340 of the transparent frame, or may be a pattern applied to the bottom surface 350 or the top surface 340 of the transparent frame , or to a surface of the total reflection layer 320 or the semi-transreflective layer 310 attached to the bottom surface 350 or the top surface 340 of the transparent frame, by spraying, printing, screen printing, PVD, electroplating, film lamination or hot stamping. The optical pattern 330 may even be a part with reflective three-dimensional or 2D features on an additional component to be attached to the bottom surface 350 or the top surface 340 of the transparent frame. The optical pattern 330 only requires that, when illuminated, it may present the effect that the light is irradiated on the total reflection layer 320 or the semi-transreflective layer 310 to allow a human eye to recognize different brightness, which may undergo multiple reflections and transmissions between the semi-transreflective layer 310 and the total reflection layer 320 to produce a randomly arranged visual depth-of-field effect. The type of this optical pattern 330 is not limited in the present disclosure.

In a variant of the present embodiment, similar to the second and third embodiments, the transparent frame 300 may be replaced by an upper frame 300a and a lower frame 300b as shown in Figures 7 and 9, the same being not repeated herein. It should be understood that in the case that the upper frame 300a and the lower frame 300b are selected to be used, if the lower frame is transparent, the conformal light panel with the conformal light-panel light source 260 and the total reflection layer 320 may be disposed on the top surface or the bottom surface of the lower frame; and if the lower frame is non-transparent, the conformal light panel with the conformal light-panel light source 260 and the total reflection layer 320 need to be disposed on the top surface of the lower frame.

As shown in FIG. 14A, the light is incident into the transparent frame 300 through the conformal light-panel light source 260. When the light propagates in the transparent frame 300 and encounters the optical pattern 330, the light is reflected in each direction. The light with the optical pattern 330 will be totally reflected if it encounters the total reflection layer 320 of the bottom surface 350 of the transparent frame 300 during propagation. If the light encounters the semi-transreflective layer 310 of the top surface 340 of the transparent frame 300 during propagation, part of the light will be transmitted through the semi-transreflective layer 310, and part of the light will be reflected by the semi-transreflective layer 310 back to the inside of the transparent frame 300. By adopting the optical total reflection mechanism of the total reflection layer 320 and the mechanism of partial light reflection and partial light transmission of the semi-transreflective layer 310, and since the bottom surface 350 of the transparent frame 300 is a three-dimensional surface with uneven height, a plurality of lights 4310, 4320, 4330, etc. on different and irregularly arranged light propagation paths are received at the same observation position 100, so that the optical patterns at a plurality of positions AD, AE, AF, etc. are visible at the observation position 100, realizing the random and repeated entry of the designed optical pattern 330 on the bottom surface 350 or the top surface 340 of the transparent frame into the sight line, thereby achieving a randomly arranged visual depth-of-field effect by attenuation and transmission by means of different light paths.

In the variant shown in FIG. 14B, the top surface of the transparent frame 300 is a three-dimensional surface with uneven height, and its bottom surface is a plane; the semi-transreflective layer 310 is attached to the three-dimensional surface with uneven height of the transparent frame 300, and the total reflection layer 320 is attached to the plane of the transparent frame 300. The light is incident into the transparent frame 300 through the conformal light-panel light source 260. When the light propagates in the transparent frame 300 and encounters the optical pattern 330, the light is reflected in each direction. The light with the optical pattern 330 will be totally reflected if it encounters the total reflection layer 320 of the bottom surface 350 of the transparent frame 300 during propagation. If the light encounters the semi-transreflective layer 310 of the top surface 340 of the transparent frame 300 during propagation, part of the light will be transmitted through the semi-transreflective layer 310, and part of the light will be reflected by the semi-transreflective layer 310 back to the inside of the transparent frame 300. By adopting the optical total reflection mechanism of the total reflection layer 320 and the mechanism of partial light reflection and partial light transmission of the semi-transreflective layer 310, and since the top surface 340 of the transparent frame 300 is a three-dimensional surface with uneven height, a plurality of lights 4530, 4540, 4550, etc. on different and irregularly arranged light propagation paths are received at the same observation position 100, so that the optical patterns at a plurality of positions AZ, BA, BB, etc. are visible at the observation position 100, realizing the random and repeated entry of the designed optical pattern 330 on the bottom surface 350 or the top surface 340 of the transparent frame into the sight line, thereby achieving a randomly arranged visual depth-of-field effect by attenuation and transmission by means of different light paths.

### Exemplary Embodiment 8

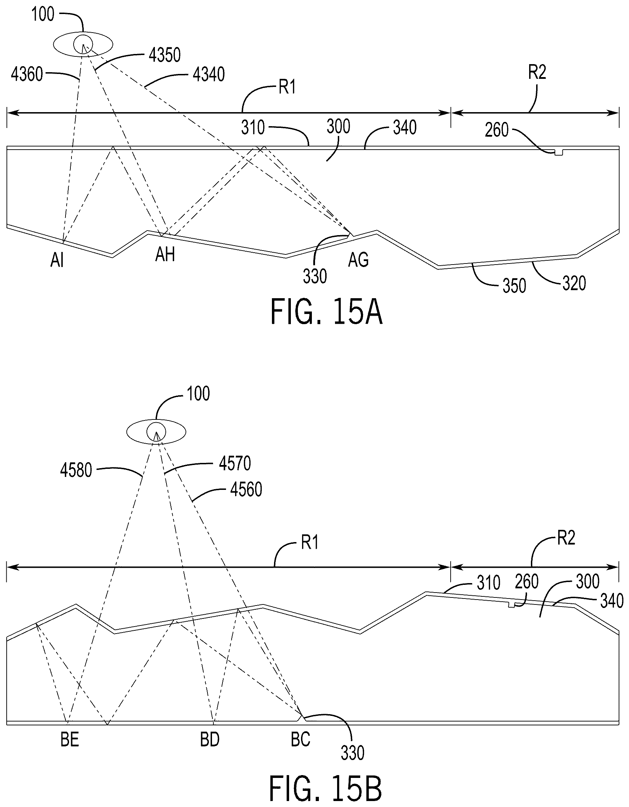

As shown in FIG. 15A and FIG. 15B, the vehicle trim component according to the present embodiment includes a conformal light-panel light source 260, a transparent frame 300, a semi-transreflective layer 310, a total reflection layer 320, and an optical pattern 330 wherein the top surface of the transparent frame 300 is a plane, and its bottom surface is a three-dimensional surface with uneven height; the semi-transreflective layer 310 is attached to the plane of the transparent frame 300, and the total reflection layer 320 is attached to the three-dimensional surface with uneven height of the transparent frame 300. The transparent frame 300 is divided into a light-emitting region R1 and a non-light-emitting region R2 wherein the light-emitting region R1 is defined as a region that needs to be functionally visible, and the non-light-emitting region R2 is defined as a region that is functionally invisible. The effect of visual concealment can be achieved through a method such as physical shielding, spraying, film lamination, or screen printing. The reflective optical pattern 330 is formed on the bottom surface 350 or the top surface 340 of the transparent frame, while the conformal light-panel light source 260 is disposed at the top of the transparent frame 300 and the arrangement position thereof is located in the non-light-emitting region R2. In particular, the bottom surface of the transparent frame 300 (i.e. the surface compounded to the total reflection layer 320) is a three-dimensional surface with uneven height, and a three-dimensional reflective surface with uneven height is provided by the total reflection layer 320. By means of the irregular arrangement of height and combined with the semi-transreflective layer 310, the effect of random arrangement of the optical pattern 330 is presented, that is, a random depth-of-field effect is observable by a human eye. Specifically, the optical pattern 330 is illuminated by the conformal light-panel light source 260, and the illuminated light propagates in the transparent frame 300 and undergoes multiple attenuated reflections and transmissions between the total reflection layer 320 and the semi-transreflective layer 310. Since the total reflection layer 320 is a three-dimensional surface with uneven height, the reflected and transmitted light presents an irregular optical path, so that an image of the reflected light of the optical pattern 330 on a certain plane in an optical transmission path undergoing multiple attenuated reflections and transmissions is observable at the same observation position, thereby forming a randomly arranged visual depth-of-field effect.

The conformal light-panel light source 260 may the light be emitted by a light-emitting element on a rigid or flexible conformal light panel having a same shape as the profile of the top surface 340 of the transparent frame 300. Since the conformal light-panel light source 260 is arranged in the non-light-emitting region R2, the light only serves as the light source. The shape of the conformal light panel is the same as the profile of the top surface 340 of the transparent frame, and it is attached to the top surface 340 of the transparent frame by means of structural installation, glue, or insert injection molding. It should be understood that, similar to the previously described embodiments, the multiple light-emitting elements of the conformal light panel light source 260 may be programmed via control software to maintain normally-on or brightness change or color change in a predetermined manner, so that an overall static, overall dynamic, or locally dynamic visual depth-of-field effect may be produced. Similarities to the prior descriptions are not repeated here.

The transparent frame 300 is a single piece formed by means of thick-wall injection molding (usually with a wall thickness of 1 mm -11 mm), and the material thereof includes, but is not limited to, a transparent injection molding material such as PC and PMMA, and its color can be colorless transparent or colored transparent.

The semi-transreflective layer 310 may be compounded on a 2D plane or a 2.5D curved surface of the top of the transparent frame 300 by pasting a semi-transreflective film, spraying/brushing a semi-transreflective coating, PVD, or attaching a part having semi-transreflective property to the top surface 340 of the transparent frame. In this embodiment, the semi-transreflective layer 310 may also be formed on the mounting carrier of the conformal light-panel light source 260 (i.e. on the conformal light panel for mounting the conformal light-panel light source 260) by a process such as spraying, screen printing, film lamination, electroplating, hot stamping, or PVD. Since the shape of the conformal light panel is the same as the profile of the top surface 340 of the transparent frame and it is attached to the top surface 340 of the transparent frame by means of structural installation, glue, or insert injection molding, the semi-transreflective function on the top surface 340 of the transparent frame is achieved after attachment.

The total reflection layer 320 may be disposed on the bottom surface of the transparent frame 300 by spraying, screen printing, film lamination, electroplating, hot stamping, or PVD processes, or three-dimensional freeform surfaces of the bottom surface of the transparent frame 300 may be microscopically configured into an optical total reflection, or the total reflection layer 320 may be disposed on the transparent frame 300 by attaching an additional part having total reflection property to the bottom surface of the transparent frame 300.

The optical pattern 330 may be a partially concave or convex three-dimensional structure (which may not be specifically processed or may be subjected to local grinding, peeling, etc.) located on the bottom surface 350 or the top surface 340 of the transparent frame, or may be a pattern applied to the bottom surface 350 or the top surface 340 of the transparent frame, or to a surface of the total reflection layer 320 or the semi-transreflective layer 310 attached to the bottom surface 350 or the top surface 340 of the transparent frame, by spraying, printing, screen printing, PVD, electroplating, film lamination or hot stamping. The optical pattern 330 may even be a part with reflective three-dimensional or 2D features on an additional component to be attached to the bottom surface 350 or the top surface 340 of the transparent frame. The optical pattern 330 only requires that, when illuminated, it may present the effect that the light is irradiated on the total reflection layer 320 or the semi-transreflective layer 310 to allow a human eye to recognize different brightness, which may undergo multiple reflections and transmissions between the semi-transreflective layer 310 and the total reflection layer 320 to produce a randomly arranged visual depth-of-field effect. The type of this optical pattern 330 is not limited in the present disclosure.

In a variant of the present embodiment, similar to the second and third embodiments, the transparent frame 300 may be replaced by an upper frame 300a and the lower frame 300b as shown in Figures 7 and 9, the same being not repeated herein. It should be understood that in the case that the upper frame 300a and the lower frame 300b are selected to be used, if the lower frame is transparent, the total reflection layer 320 may be disposed on the top surface or the bottom surface of the lower frame; and if the lower frame is non-transparent, and the total reflection layer 320 need to be disposed on the top surface of the lower frame.

As shown in FIG. 15A, the light is incident into the transparent frame 300 through the conformal light-panel light source 260. When the light propagates in the transparent frame 300 and encounters the optical pattern 330, the light is reflected in each direction. The light with the optical pattern 330 will be totally reflected if it encounters the total reflection layer 320 of the bottom surface 350 of the transparent frame 300 during propagation. If the light encounters the semi-transreflective layer 310 of the top surface 340 of the transparent frame 300 during propagation, part of the light will be transmitted through the semi-transreflective layer 310, and part of the light will be reflected by the semi-transreflective layer 310 back to the inside of the transparent frame 300. By adopting the optical total reflection mechanism of the total reflection layer 320 and the mechanism of partial light reflection and partial light transmission of the semi-transreflective layer 310, and since the bottom surface 350 of the transparent frame 300 is a three-dimensional surface with uneven height, a plurality of lights 4340, 4350, 4360, etc. on different and irregularly arranged light propagation paths are received at the same observation position 100, so that the optical patterns at a plurality of positions AG, AH, AI, etc. are visible at the observation position 100, realizing the random and repeated entry of the designed optical pattern 330 on the bottom surface 350 or the top surface 340 of the transparent frame into the sight line, thereby achieving a randomly arranged visual depth-of-field effect by attenuation and transmission by means of different light paths.

In the variant shown in FIG. 15B, the top surface of the transparent frame 300 is a three-dimensional surface with uneven height, and its bottom surface is a plane; the semi-transreflective layer 310 is attached to the three-dimensional surface with uneven height of the transparent frame 300, and the total reflection layer 320 is attached to the plane of the transparent frame 300. The light is incident into the transparent frame 300 through the conformal light-panel light source 260. When the light propagates in the transparent frame 300 and encounters the optical pattern 330, the light is reflected in each direction. The light with the optical pattern 330 will be totally reflected if it encounters the total reflection layer 320 of the bottom surface 350 of the transparent frame 300 during propagation. If the light encounters the semi-transreflective layer 310 of the top surface 340 of the transparent frame 300 during propagation, part of the light will be transmitted through the semi-transreflective layer 310, and part of the light will be reflected by the semi-transreflective layer 310 back to the inside of the transparent frame 300. By adopting the optical total reflection mechanism of the total reflection layer 320 and the mechanism of partial light reflection and partial light transmission of the semi-transreflective layer 310, and since the top surface 340 of the transparent frame 300 is a three-dimensional surface with uneven height, a plurality of lights 4560, 4570, 4580, etc. on different and irregularly arranged light propagation paths are received at the same observation position 100, so that the optical patterns at a plurality of positions BC, BD, BE, etc. are visible at the observation position 100, realizing the random and repeated entry of the designed optical pattern 330 on the bottom surface 350 or the top surface 340 of the transparent frame into the sight line, thereby achieving a randomly arranged visual depth-of-field effect by attenuation and transmission by means of different light paths.

### Exemplary Embodiment 9

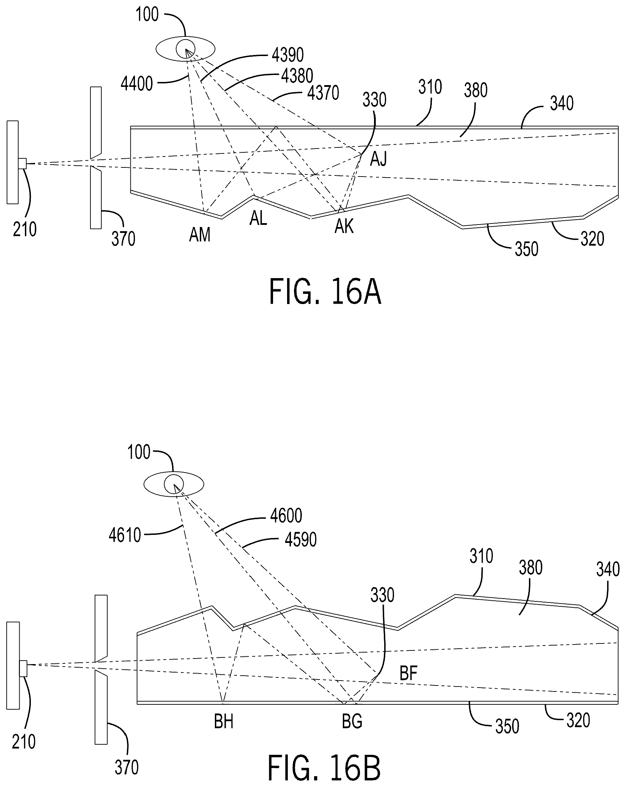

As shown in FIG. 16A and FIG. 16B, the vehicle trim component according to the present embodiment comprises a side-lit light source 210, a transparent frame 380 with tiny reflective particles, a semi-transreflective layer 310, a total reflection layer 320, an optical pattern 330, and a patterned light-transmitting layer 370 wherein the transparent frame 380 is formed by an injection molding process and the injection molding material is mixed with reflective tiny particles. These tiny particles are uniformly distributed throughout the transparent frame 380 when the transparent frame 380 is injection-molded, and are substantially invisible in general visual situations. The top surface of the transparent frame 380 is a plane, and its bottom surface is a three-dimensional surface with uneven height; the semi-transreflective layer 310 is attached to the plane of the transparent frame 380, the total reflection layer 320 is attached to the three-dimensional surface with uneven height of the transparent frame 380, the side-lit light source 210 is located on a side of the transparent frame 380, and the patterned light-transmitting layer 370 is arranged between the side-lit light source 210 and the transparent frame 380. The pattern area on the patterned light-transmitting layer 370 is light-transmissive, while the non-patterned area is non-light-transmissive, so as to ensure that the light emitted by the side-lit light source 210 has a specific light pattern after passing through the patterned light-transmitting layer 370. When the light with a specific light pattern is emitted from the side-lit light source 210 into the transparent frame 380 through the patterned light-transmitting layer 370, the specific light pattern may be seen in the transparent frame 380 by a human eye, and any one of the light-emitting points on the light with the specific light pattern is the optical pattern 330. In particular, the bottom surface of the transparent frame 380 (i.e. the surface compounded to the total reflection layer 320) is a three-dimensional surface with uneven height, and a three-dimensional reflective surface with uneven height is provided by the total reflection layer 320. By means of the irregular arrangement of height and combined with the semi-transreflective layer 310, the effect of random arrangement of the optical pattern 330 is presented, that is, a random depth-of-field effect is observable by a human eye. Specifically, due to the reflective characteristics of the tiny particles in the transparent frame 380, the light with the formed optical pattern 330 undergoes multiple attenuated reflections and transmissions between the total reflection layer 320 and the semi-transreflective layer 310. Since the total reflection layer 320 is a three-dimensional surface with uneven height, the reflected and transmitted light presents an irregular optical path, so that an image of the reflected light of the optical pattern 330 on a certain plane in an optical transmission path undergoing multiple attenuated reflections and transmissions is observable at the same observation position, thereby forming a randomly arranged visual depth-of-field effect.

The side-lit light source 210 may be a PCB light panel with LED lamp beads, or may be a light guide strip, a light guide plate, a diffusion film, a diffusion plate, a light-emitting film, or a light-emitting fiber capable of emitting light after being irradiated by the light source. It should be understood that similar to the first embodiment, a plurality of LEDs or other light units constituting the light source in the side-lit light source 210 may be programmed to control the side-lit light source 210 to maintain normally-on or brightness change or color change in a predetermined manner, so that an overall static, overall dynamic, or locally dynamic visual depth-of-field effect may be produced. Similarities to the prior descriptions are not repeated here.

The transparent frame 380 is a single piece formed by means of thick-wall injection molding (usually with a wall thickness of 1 mm -11 mm), and the material thereof includes, but is not limited to, a transparent injection molding material such as PC and PMMA, and tiny reflective particles need to be mixed thereinto, and its color can be colorless transparent or colored transparent.

The semi-transreflective layer 310 may be compounded on a 2D plane or a 2.5D curved surface of the top of the transparent frame 380 by pasting a semi-transreflective film, spraying/brushing a semi-transreflective coating, PVD, or attaching a part having semi-transreflective property to the top surface 340 of the transparent frame.

The total reflection layer 320 may be disposed on the bottom surface of the transparent frame 380 by spraying, screen printing, film lamination, electroplating, hot stamping or PVD processes, or three-dimensional freeform surfaces of the bottom surface of the transparent frame 380 may be microscopically configured into an optical total reflection, or the total reflection layer 320 may be disposed on the transparent frame 380 by attaching an additional part having total reflection property to the bottom surface of the transparent frame 380.

The optical pattern 330 is formed in the transparent frame 380, and specifically, the light emitted by the side-lit light source 210 forms a light with a special light pattern after passing through the patterned light-transmitting layer 370. After the light with the special light pattern is incident into the transparent frame 380 with the tiny reflective particles, the optical pattern 330 is formed by illuminating these tiny reflective particles.

The patterned light-transmitting layer 370 may be a pure transparent plate on which a light-transmitting region with a specific pattern and a non-light-transmitting region are formed by applying a film (the light-transmitting and non-light-transmitting of the film are realized through printing, screen printing or direct perforation, etc.), masking and spraying, screen printing, electroplating, PVD, hot stamping, masking with another part, etc.; or may be an opaque plate, on which a light-transmitting region with a specific pattern and a non-light-transmitting region are formed by perforation or laser engraving, etc. to form a light-transmitting opening on the opaque plate; or may even be a film, on which a light-transmitting region with a specific pattern and a non-light-transmitting region are formed by applying a film, spraying, screen printing, electroplating, PVD, hot stamping, or masking with another part, etc. The type of the patterned light-transmitting layer 370 is not limited in the present disclosure.

As shown in FIG. 16A, the light is emitted by the side-lit light source 210 and incident into the transparent frame 380 after passing through the patterned light-transmitting layer 370, and forms an optical pattern 330 visible to a human eye after irradiating the reflective particles (for example, AJ) in the transparent frame 380, and will be reflected and diffracted in each direction. The reflected and diffracted light will be totally reflected if it encounters the total reflection layer 320 of the bottom surface 350 of the transparent frame 380 during propagation. If the reflected and diffracted light encounters the semi-transreflective layer 310 of the top surface 340 of the transparent frame 380 during propagation, part of the light will be transmitted through the semi-transreflective layer 310, and part of the light will be reflected by the semi-transreflective layer 310 back to the inside of the transparent frame 380. By adopting the optical total reflection mechanism of the total reflection layer 320 and the mechanism of partial light reflection and partial light transmission of the semi-transreflective layer 310, and since the bottom surface 350 of the transparent frame 380 is a three-dimensional surface with uneven height, a plurality of lights 4370, 4380, 4390, 4400, etc. on different and irregularly arranged light propagation paths are received at the same observation position 100, so that the optical patterns at a plurality of positions AJ, AK, AL, AM, etc. are visible at the observation position 100, realizing the random and repeated entry of the designed optical pattern on the patterned light-transmitting layer 370 into the sight line, thereby achieving a randomly arranged visual depth-of-field effect by attenuation and transmission by means of different light paths.

In the variant shown in FIG. 16B, the top surface of the transparent frame 380 is a three-dimensional surface with uneven height, and its bottom surface is a plane; the semi-transreflective layer 310 is attached to the three-dimensional surface with uneven height of the transparent frame 380, and the total reflection layer 320 is attached to the plane of the transparent frame 380. The light is emitted by the side-lit light source 210 and incident into the transparent frame 380 after passing through the patterned light-transmitting layer 370, and forms an optical pattern 330 visible to a human eye after irradiating the reflective particles (for example, BF) in the transparent frame 380, and will be reflected and diffracted in each direction. If the reflected and diffracted light encounters the semi-transreflective layer 310 of the top surface 340 of the transparent frame 380 during propagation, part of the light will be transmitted through the semi-transreflective layer 310, and part of the light will be reflected by the semi-transreflective layer 310 back to the inside of the transparent frame 380. By adopting the optical total reflection mechanism of the total reflection layer 320 and the mechanism of partial light reflection and partial light transmission of the semi-transreflective layer 310, and since the top surface 340 of the transparent frame 380 is a three-dimensional surface with uneven height, a plurality of lights 4590, 4600, 4610, etc. on different and irregularly arranged light propagation paths are received at the same observation position 100, so that the optical patterns at a plurality of positions BF, BG, BH, etc. are visible at the observation position 100, realizing the random and repeated entry of the designed optical pattern on the patterned light-transmitting layer 370 into the sight line, thereby achieving a randomly arranged visual depth-of-field effect by attenuation and transmission by means of different light paths.

### Exemplary Embodiment 10

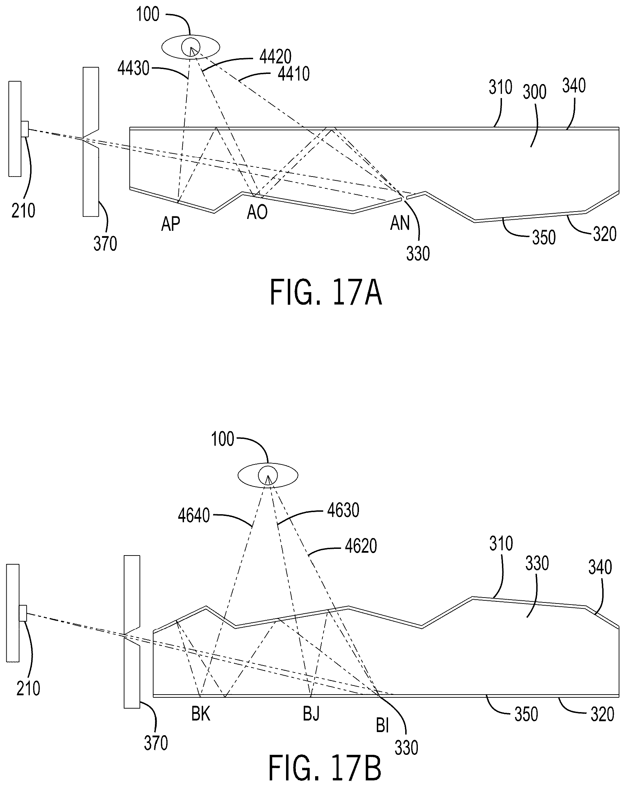

As shown in FIG. 17A and FIG. 17B, the vehicle trim component according to the present embodiment includes a side-lit light source 210, a transparent frame 300, a semi-transreflective layer 310, a total reflection layer 320, an optical pattern 330, and a patterned light-transmitting layer 370 wherein the top surface of the transparent frame 300 is a plane, and its bottom surface is a three-dimensional surface with uneven height; the semi-transreflective layer 310 is attached to the plane of the transparent frame 300, the total reflection layer 320 is attached to the three-dimensional surface of the transparent frame 300, the side-lit light source 210 is located on a side of the transparent frame 300, and the patterned light-transmitting layer 370 is arranged between the side-lit light source 210 and the transparent frame 300. The pattern area on the patterned light-transmitting layer 370 is light-transmissive, while the non-patterned area is non-light-transmissive, so as to ensure that the light emitted by the side-lit light source 210 has a specific light pattern after passing through the patterned light-transmitting layer 370. When the light with a specific light pattern is emitted from the side-lit light source 210 into the transparent frame 300 through the patterned light-transmitting layer 370 and is irradiated on the total reflection layer 320 or the semi-transreflective layer 310, the optical pattern 330 visible to a human eye is formed. In particular, the bottom surface of the transparent frame 300 (i.e. the surface compounded to the total reflection layer 320) is a three-dimensional surface with uneven height, and a three-dimensional reflective surface with uneven height is provided by the total reflection layer 320. By means of the irregular arrangement of height and combined with the semi-transreflective layer 310, the effect of random arrangement of the optical pattern 330 is presented, that is, a random depth-of-field effect is observable by a human eye. Specifically, after the light emitted by the side-lit light source 210 passes through the patterned light-transmitting layer 370 into the transparent frame 300 and is irradiated on the total reflection layer 320 or the semi-transreflective layer 310, the light of the formed optical pattern 330 undergoes multiple attenuated reflections and transmissions between the total reflection layer 320 and the semi-transreflective layer 310. Since the total reflection layer 320 is a three-dimensional surface with uneven height, the reflected and transmitted light presents an irregular optical path, so that an image of the reflected light of the optical pattern 330 on a certain plane in an optical transmission path undergoing multiple attenuated reflections and transmissions is observable at the same observation position, thereby forming a randomly arranged visual depth-of-field effect.

The side-lit light source 210 may be a PCB light panel with LED lamp beads, or may be a light guide strip, a light guide plate, a diffusion film, a diffusion plate, a light-emitting film, or a light-emitting fiber capable of emitting light after being irradiated by the light source. It should be understood that similar to the first embodiment, a plurality of LEDs or other light units constituting the light source in the side-lit light source 210 may be programmed to control the side-lit light source 210 to maintain normally-on or brightness change or color change in a predetermined manner, so that an overall static, overall dynamic, or locally dynamic visual depth-of-field effect may be produced. Similarities to the prior descriptions are not repeated here.

The transparent frame 300 is a single piece formed by means of thick-wall injection molding (usually with a wall thickness of 1 mm -11 mm), and the material thereof includes, but is not limited to, a transparent injection molding material such as PC and PMMA, and its color can be colorless transparent or colored transparent.

The semi-transreflective layer 310 may be compounded on a 2D plane or a 2.5D curved surface of the top of the transparent frame 380 by pasting a semi-transreflective film, spraying/brushing a semi-transreflective coating, PVD, or attaching a part having semi-transreflective property to the top surface 340 of the transparent frame.

The total reflection layer 320 may be disposed on the bottom surface of the transparent frame 300 by spraying, screen printing, film lamination, electroplating, hot stamping or PVD processes, or three-dimensional freeform surfaces of the bottom surface of the transparent frame 300 may be microscopically configured into an optical total reflection, or the total reflection layer 320 may be disposed on the transparent frame 300 by attaching an additional part having total reflection property to the bottom surface of the transparent frame 300.

The optical pattern 330 is formed on the total reflection layer 320 or the semi-transreflective layer 310. Specifically, the light emitted by the side-lit light source 210 forms a light with a special light pattern after passing through the patterned light-transmitting layer 370, and the light with the special light pattern enters the transparent frame 300 and then irradiates the total reflection layer 320 or the semi-transreflective layer 310 to form the optical pattern 330.

The patterned light-transmitting layer 370 may be a pure transparent plate on which a light-transmitting region with a specific pattern and a non-light-transmitting region are formed by applying a film (the light-transmitting and non-light-transmitting of the film are realized through printing, screen printing or direct perforation, etc.), masking and spraying, screen printing, electroplating, PVD, hot stamping, masking with another part, etc.; or may be an opaque plate, on which a light-transmitting region with a specific pattern and a non-light-transmitting region are formed by perforation or laser engraving, etc. to form a light-transmitting opening on the opaque plate; or may even be a film, on which a light-transmitting region with a specific pattern and a non-light-transmitting region are formed by applying a film, spraying, screen printing, electroplating, PVD, hot stamping, or masking with another part, etc. The type of the patterned light-transmitting layer 370 is not limited in the present disclosure.

In a variant of the present embodiment, similar to the second and third embodiments, the transparent frame 300 may be replaced by an upper transparent frame 300a and a lower transparent frame 300b as shown in Figures 7 and 9, the same being not repeated herein.

As shown in FIG. 17A, the light is emitted by the side-lit light source 210 and incident into the transparent frame 300 after passing through the patterned light-transmitting layer 370, and forms an optical pattern 330 visible to a human eye after irradiating the total reflection layer 320 or the semi-transreflective layer 310, and will be reflected in each direction. The light with the optical pattern 330 will be totally reflected if it encounters the total reflection layer 320 of the bottom surface 350 of the transparent frame 300 during propagation. If the light encounters the semi-transreflective layer 310 of the top surface 340 of the transparent frame 300 during propagation, part of the light will be transmitted through the semi-transreflective layer 310, and part of the light will be reflected by the semi-transreflective layer 310 back to the inside of the transparent frame 300. By adopting the optical total reflection mechanism of the total reflection layer 320 and the mechanism of partial light reflection and partial light transmission of the semi-transreflective layer 310, and since the bottom surface 350 of the transparent frame 300 is a three-dimensional surface with uneven height, a plurality of lights 4410, 4420, 4430, etc. on different and irregularly arranged light propagation paths are received at the same observation position 100, so that the optical patterns at a plurality of positions AN, AO, AP, etc. are visible at the observation position 100, realizing the random and repeated entry of the designed optical pattern on the patterned light-transmitting layer 370 into the sight line, thereby achieving a randomly arranged visual depth-of-field effect by attenuation and transmission by means of different light paths.

In the variant shown in FIG. 17B, the top surface of the transparent frame 300 is a three-dimensional surface with uneven height, and its bottom surface is a plane; the semi-transreflective layer 310 is attached to the three-dimensional surface with uneven height of the transparent frame 300, and the total reflection layer 320 is attached to the plane of the transparent frame 300. The light is emitted by the side-lit light source 210 and incident into the transparent frame 300 after passing through the patterned light-transmitting layer 370, and forms an optical pattern 330 visible to a human eye after irradiating the total reflection layer 320 or the semi-transreflective layer 310, and will be reflected in each direction. The light with the optical pattern 330 will be totally reflected if it encounters the total reflection layer 320 of the bottom surface 350 of the transparent frame 300 during propagation. If the light encounters the semi-transreflective layer 310 of the top surface 340 of the transparent frame 300 during propagation, part of the light will be transmitted through the semi-transreflective layer 310, and part of the light will be reflected by the semi-transreflective layer 310 back to the inside of the transparent frame 300. By adopting the optical total reflection mechanism of the total reflection layer 320 and the mechanism of partial light reflection and partial light transmission of the semi-transreflective layer 310, and since the top surface 340 of the transparent frame 300 is a three-dimensional surface with uneven height, a plurality of lights 4620, 4630, 4640, etc. on different and irregularly arranged light propagation paths are received at the same observation position 100, so that the optical patterns at a plurality of positions BI, BJ, BK, etc. are visible at the observation position 100, realizing the random and repeated entry of the designed optical pattern on the patterned light-transmitting layer 370 into the sight line, thereby achieving a randomly arranged visual depth-of-field effect by attenuation and transmission by means of different light paths.

### Exemplary Embodiment 11

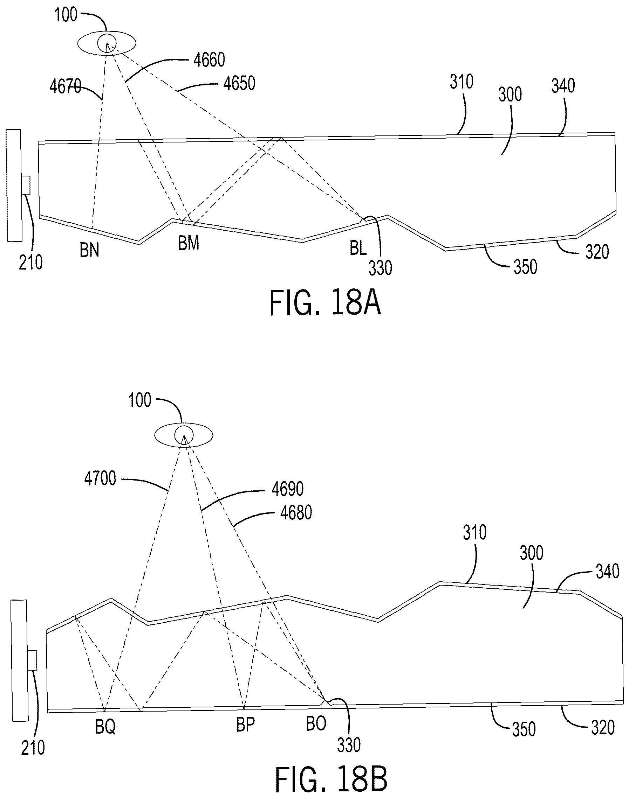

As shown in FIG. 18A and FIG. 18B, the vehicle trim component according to the present embodiment includes a side-lit light source 210, a transparent frame 300, a semi-transreflective layer 310, a total reflection layer 320, and an optical pattern 330 wherein the top surface of the transparent frame 300 is a plane, and its bottom surface is a three-dimensional surface with uneven height; the semi-transreflective layer 310 is attached to the plane of the transparent frame 300, the total reflection layer 320 is attached to the three-dimensional surface with uneven height of the transparent frame 300, the side-lit light source 210 is located on a side of the transparent frame 300, and the reflective optical pattern 330 is formed on the bottom surface 350 or the top surface 340 of the transparent frame. In particular, the bottom surface of the transparent frame 300 (i.e. the surface compounded to the total reflection layer 320) is a three-dimensional surface with uneven height, and a three-dimensional reflective surface with uneven height is provided by the total reflection layer 320. By means of the irregular arrangement of height and combined with the semi-transreflective layer 310, the effect of random arrangement of the optical pattern 330 is presented, that is, a random depth-of-field effect is observable by a human eye. Specifically, after the light emitted by the side-lit light source 210 irradiates the optical pattern 330, the light with the optical pattern 330 undergoes multiple attenuated reflections and transmissions between the total reflection layer 320 and the semi-transreflective layer 310, and since the total reflection layer 320 is a three-dimensional surface with uneven height, the reflected and transmitted light presents an irregular optical path, so that an image of the reflected light of the optical pattern 330 on a certain plane in an optical transmission path undergoing multiple attenuated reflections and transmissions is observable at the same observation position, thereby forming a randomly arranged visual depth-of-field effect.

The side-lit light source 210 may be a PCB light panel with LED lamp beads, or may be a light guide strip, a light guide plate, a diffusion film, a diffusion plate, a light-emitting film, or a light-emitting fiber capable of emitting light after being irradiated by the light source. It should be understood that similar to the first embodiment, a plurality of LEDs or other light units constituting the light source in the side-lit light source 210 may be programmed to control the side-lit light source 210 to maintain normally-on or brightness change or color change in a predetermined manner, so that an overall static, overall dynamic, or locally dynamic visual depth-of-field effect may be produced. Similarities to the prior descriptions are not repeated here.

The transparent frame 300 is a single piece formed by means of thick-wall injection molding (usually with a wall thickness of 1 mm -11 mm), and the material thereof includes, but is not limited to, a transparent injection molding material such as PC and PMMA, and its color can be colorless transparent or colored transparent.

The semi-transreflective layer 310 may be compounded on a 2D plane or a 2.5D curved surface of the top of the transparent frame 380 by pasting a semi-transreflective film, spraying/brushing a semi-transreflective coating, PVD, or attaching a part having semi-transreflective property to the top surface 340 of the transparent frame.

The total reflection layer 320 may be disposed on the bottom surface of the transparent frame 300 by spraying, screen printing, film lamination, electroplating, hot stamping or PVD processes, or three-dimensional freeform surfaces of the bottom surface of the transparent frame 300 may be microscopically configured into an optical total reflection, or the total reflection layer 320 may be disposed on the transparent frame 300 by attaching an additional part having total reflection property to the bottom surface of the transparent frame 300.

The optical pattern 330 may be a partially concave or convex three-dimensional structure (which may not be specifically processed or may be subjected to local grinding, peeling, etc.) located on the bottom surface 350 or the top surface 340 of the transparent frame, or may be a pattern applied to the bottom surface 350 or the top surface 340 of the transparent frame , or to a surface of the total reflection layer 320 or the semi-transreflective layer 310 attached to the bottom surface 350 or the top surface 340 of the transparent frame, by spraying, printing, screen printing, PVD, electroplating, film lamination or hot stamping. The optical pattern 330 may even be a part with reflective three-dimensional or 2D features on an additional component to be attached to the bottom surface 350 or the top surface 340 of the transparent frame. The optical pattern 330 only requires that, when illuminated, it may present the effect that the light is irradiated on the total reflection layer 320 or the semi-transreflective layer 310 to allow a human eye to recognize different brightness, which may undergo multiple reflections and transmissions between the semi-transreflective layer 310 and the total reflection layer 320 to produce a randomly arranged visual depth-of-field effect. The type of this optical pattern 330 is not limited in the present disclosure.

In a variant of the present embodiment, similar to the second and third embodiments, the transparent frame 300 may be replaced by an upper transparent frame 300a and a lower transparent frame 300b as shown in Figures 7 and 9, the same being not repeated herein.

As shown in FIG. 18A, the light is emitted by the side-lit light source 210 into the transparent frame 300 and will be reflected in each direction after irradiating the optical pattern 330 on the bottom surface 350 or the top surface 340 of the transparent frame. The light with the optical pattern 330 will be totally reflected if it encounters the total reflection layer 320 of the bottom surface 350 of the transparent frame 300 during propagation. If the light encounters the semi-transreflective layer 310 of the top surface 340 of the transparent frame 300 during propagation, part of the light will be transmitted through the semi-transreflective layer 310, and part of the light will be reflected by the semi-transreflective layer 310 back to the inside of the transparent frame 300. By adopting the optical total reflection mechanism of the total reflection layer 320 and the mechanism of partial light reflection and partial light transmission of the semi-transreflective layer 310, and since the bottom surface 350 of the transparent frame 300 is a three-dimensional surface with uneven height, a plurality of lights 4650, 4660, 4670, etc. on different and irregularly arranged light propagation paths are received at the same observation position 100, so that the optical patterns at a plurality of positions BL, BM, BN, etc. are visible at the observation position 100, realizing the random and repeated entry of the designed optical pattern 330 on the bottom surface 350 or the top surface 340 of the transparent frame into the sight line, thereby achieving a randomly arranged visual depth-of-field effect by attenuation and transmission by means of different light paths.

In the variant shown in FIG. 18B, the top surface of the transparent frame 300 is a three-dimensional surface with uneven height, and its bottom surface is a plane; the semi-transreflective layer 310 is attached to the three-dimensional surface with uneven height of the transparent frame 300, and the total reflection layer 320 is attached to the plane of the transparent frame 300. The light with the optical pattern 330 will be totally reflected if it encounters the total reflection layer 320 of the bottom surface 350 of the transparent frame 300 during propagation. If the light encounters the semi-transreflective layer 310 of the top surface 340 of the transparent frame 300 during propagation, part of the light will be transmitted through the semi-transreflective layer 310, and part of the light will be reflected by the semi-transreflective layer 310 back to the inside of the transparent frame 300. By adopting the optical total reflection mechanism of the total reflection layer 320 and the mechanism of partial light reflection and partial light transmission of the semi-transreflective layer 310, and since the top surface 340 of the transparent frame 300 is a three-dimensional surface with uneven height, a plurality of lights 4680, 4690, 4700, etc. on different and irregularly arranged light propagation paths are received at the same observation position 100, so that the optical patterns at a plurality of positions BO, BP, BQ, etc. are visible at the observation position 100, realizing the random and repeated entry of the designed optical pattern 330 on the bottom surface 350 or the top surface 340 of the transparent frame into the sight line, thereby achieving a randomly arranged visual depth-of-field effect by attenuation and transmission by means of different light paths.

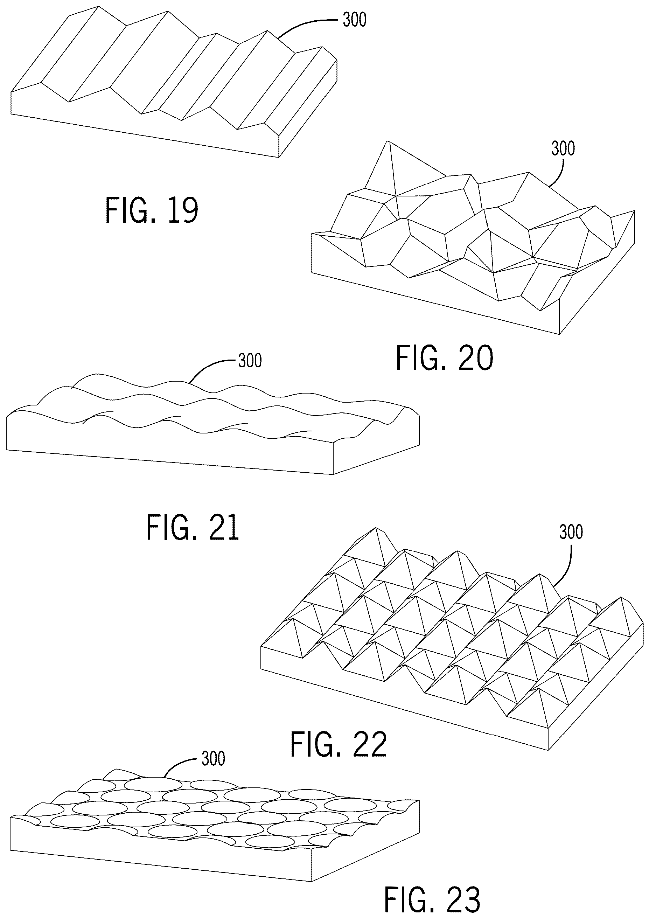

The bottom surface of the transparent frame 300 of the present disclosure is an irregular three-dimensional surface with uneven height. The three-dimensional surface with uneven height herein is a non-integral plane, and there are convex or concave surfaces with different localized heights on the entire three-dimensional surface with uneven height in different positions. From microscopic perspective, these convex or concave surfaces with different heights may be planar or curved surfaces with curvature, and a connecting surface for connecting these convex or concave surfaces with different localized heights on the three-dimensional surface may also be a plane or a curved surface from microscopic perspective. For ease of understanding, some common irregular three-dimensional surfaces with uneven height are illustrated from macro perspective, but the described irregular three-dimensional surfaces with uneven height include, but are not limited to, the following examples: FIG. 19 is an undulating sawtooth three-dimensional surface with same/different heights and angles in a unidirectional arrangement; FIG. 20 is an irregularly cut three-dimensional surface with same/different heights and angles in each direction; FIG. 21 is a freeform three-dimensional surface with same/different heights and curvatures in each direction; FIG. 22 is a three-dimensional surface with convex/concave geometric cutting bodies having same/different shapes and distributed randomly or regularly on a plane; and FIG. 23 is a three-dimensional surface with convex/concave curved solids having certain curvatures and distributed randomly or regularly on a plane.

By means of the irregular three-dimensional surface with uneven height, a random and unordered effect can be provided, thereby avoiding an industrial, stereotyped appearance and being suitable for creating a high-tech atmosphere. Taking a triangular pattern as an example, in a certain viewing angle, 5 to 6 or 7 to 8 fading triangular patterns may be correspondingly presented through the total reflection and the semi-reflection semi-transmission, and these patterns are presented as irregularly arranged (and no longer presented as equidistant in the prior art), and then the effect produced by this pattern at different viewing angles will not be the same, thereby creating a surprise.

It should be understood that the brightness of entire light spots is the same if only the total reflection layer with uneven height is provided but without a semi-transreflective layer. For example, if a blue light source performs irradiation from above the total reflection layer, it will produce a blue expanse with uneven height and varying shades. In contrast, the present disclosure may provide a fading depth-of-field effect by means of a semi-transreflective layer.

The above contents are only preferred embodiments of the present disclosure and are not intended to limit the scope of the present disclosure, and various changes may also be made in the previously described embodiments of the present disclosure. That is, any simple, equivalent change and modification made according to the claims and the description of the present disclosure fall within the protection scope of the claims of the present disclosure. Any content not described in detail by the present disclosure belongs to conventional technical content.

## Claims

1. A vehicle trim component comprises a light source, a transparent frame, a semi-transreflective layer, a total reflection layer and an optical pattern wherein at least one of two opposing surfaces of the transparent frame comprises a three-dimensional surface with uneven height and the semi-transreflective layer and the total reflection layer are respectively attached to the two opposing surfaces, so that light from the light source illuminating the optical pattern undergoes multiple attenuated reflections and transmissions along irregular optical paths between the total reflection layer and the semi-transreflective layer to produce a randomly arranged visual depth-of-field effect.

2. The vehicle trim component according to claim 1,
wherein the three-dimensional surface with uneven height comprises, at different positions, convex and/or concave surface areas so as to form raised and/or recessed areas, respectively wherein the convex and/or concave surface areas are planar and/or curved surfaces, and wherein one or more connecting surfaces between adjacent convex and/or concave surface areas are planar and/or curved surfaces.

3. The vehicle trim component according to claim 2,
wherein the three-dimensional surface comprises: an unidirectionally arranged three-dimensional surface with undulating sawtooth patterns of identical or varying heights and angles, a irregularly cut three-dimensional surface with identical or varying heights and angles in all directions, a freeform three-dimensional surface with identical or varying heights and curvatures in all directions, a three-dimensional surface with geometric cutting bodies with the identical or varying shapes of protrusions or depressions randomly or regularly distributed on a planar or a three-dimensional surface with protrusions or depressions with certain curvature randomly or regularly distributed on a plane.

4. The vehicle trim component according to claim 1,
wherein the optical pattern is integrated inside the transparent frame.

5. The vehicle trim component according to claim 4,
wherein the optical pattern is implemented by printing, etching, laser engraving, forming air bubbles, or insert injection molding of reflective materials or of components inside the transparent frame.

6. The vehicle trim component according to claim 1,
wherein the optical pattern is a light-transmitting structure formed on the total reflection layer.

7. The vehicle trim component according to claim 6,
wherein the optical pattern is achieved by engraving and perforating, punching, partially masking with a total reflection surface treatment, or by printing a light-transmitting dot, line or surface pattern on the total reflection layer.

8. The vehicle trim component according to claim 1,
wherein the optical pattern is provided by a grating film arranged on a side of the transparent frame.

9. The vehicle trim component according to claim 1,
wherein the optical pattern is provided by a point light source arranged in the transparent frame.

10. The vehicle trim component according to claim 1,
wherein the optical pattern is provided by a light guide strip arranged at least partially in the transparent frame.

11. The vehicle trim component according to claim 1,
wherein the optical pattern is provided by a conformal light-panel light source disposed on one of the two opposing surfaces of the transparent frame.

12. The vehicle trim component according to claim 1,
wherein the optical pattern is formed on one of the two opposing surfaces of the transparent frame.

13. The vehicle trim component according to claim 12,
wherein the optical pattern comprises: a three-dimensional structure of localized recesses or protrusions on one of the two opposing surfaces of the transparent frame; or a pattern applied by spraying, printing, screen printing, PVD, electroplating, film lamination or hot stamping on the transparent frame; or a pattern on the surface of the total reflection layer or the transreflective layer laminated to the transparent frame; or an additional component with reflective three-dimensional or two-dimensional features attached to one of the two opposing surfaces of the transparent frame.

14. The vehicle trim component according to claim 1,
wherein the optical pattern is provided by a patterned light-transmitting layer disposed on a side of the transparent frame.

15. The vehicle trim component according to claim 14,
wherein the patterned light-transmitting layer comprises a transparent plate on which a patterned light-transmitting region and a non-light-transmitting region are formed by film lamination, masking and spraying, screen printing, electroplating, PVD, hot stamping or masking with another component; or comprises an opaque plate on which patterned light-transmitting and a non-light-transmitting regions are formed by perforation or laser engraving to form light-transmitting openings; or comprises a film, on which a patterned light-transmitting region and non-light-transmitting regions are formed by film lamination, spraying, screen printing, electroplating, PVD, hot stamping, or masking with another component.

16. The vehicle trim component according to claim 1,
wherein the light source is a side-entry light source disposed on a side of the transparent frame.

17. The vehicle trim component according to claim 1,
wherein the light source is a surface light source or a point light source located on a side of the total reflection layer facing away from the semi-transreflective layer.

18. The vehicle trim component according to claim 16 or 17,
wherein the light source comprises a PCB light panel with LED lamp beads, or a light guide strip, a light guide plate, a diffusion film, a diffusion plate, a light-emitting film, or a light-emitting fiber configured to emit light when illuminated.

19. The vehicle trim component according to claim 1,
wherein the light source is a coherent light source.

20. The vehicle trim component according to claim 1,
herein the light source is a point light source disposed inside the transparent frame.

21. The vehicle trim component according to claim 1,
wherein the light source comprises a conformal light-panel light source disposed on one of the two opposing surfaces of the transparent frame.

22. The vehicle trim component according to claim 21,
wherein the transparent frame comprises a light-emitting region and a non-light-emitting region, and the conformal light-panel light source is disposed in the non-light-emitting region.

23. The vehicle trim component according to claim 21,
wherein a conformal light panel of the conformal light-panel light source is a rigid or flexible light panel, and has a same profile as one of the two opposing surfaces of the transparent frame and is attached thereto by means of structural mounting, adhesive bonding or insert injection molding.

24. The vehicle trim component according to claim 1,
wherein the semi-transreflective layer is disposed on the transparent frame by laminating a semi-transreflective film, by spraying, by PVD, or by attaching a component with semi-transreflective properties to one of the opposing surfaces of the transparent frame.

25. The vehicle trim component according to claim 1,
wherein the total reflection layer is disposed on one of the two opposing surfaces of the transparent frame by spraying, screen printing, film lamination, electroplating, hot stamping or PVD processes; or by microscopically structuring a three-dimensional freeform surface of one of the two opposing surfaces of the transparent frame to achieve optical total reflection; or by attaching a component having total reflection properties to one of the two opposing surfaces of the transparent frame.

26. The vehicle trim component according to claim 1,
wherein the transparent frame is a single piece formed by injection molding.

27. The vehicle trim component according to claim 26,
wherein thickness of the transparent frame is 1 mm to 11 mm.

28. The vehicle trim component according to claim 1,
wherein injection molding material of the transparent frame is mixed with reflective particles.

29. The vehicle trim component according to claim 1,
wherein the transparent frame comprises an upper frame and a lower frame formed by injection molding wherein the semi-transreflective layer is supported on one of two opposing surfaces of the upper frame, and the total reflection layer is supported on one of two opposing surfaces of the lower frame.

30. The vehicle trim component according to claim 29,
wherein thickness of the upper frame is 1 mm to 11 mm, and/or thickness of the lower frame is 1 mm to 11 mm.

31. The vehicle trim component according to claim 29,
wherein the lower frame is a non-transparent component, and the total reflection layer is attached to a surface of the lower frame which faces the upper frame between the two opposing surfaces.

32. The vehicle trim component according to claim 31,
herein openings are provided in the lower frame and the total reflection layer to form the optical pattern.
